# EUROPÄISCHE PATENTSCHRIFT

(11) **EP 1 981 284 B1**
(45) Veröffentlichungstag und Bekanntmachung des Hinweises auf die Patenterteilung: **26.08.2020**
(21) Anmeldenummer: 07007559.3
(22) Anmeldetag: 12.04.2007
(51) Int. Cl.: H04N 5/00, H04N 7/173, H04N 21/232, H04N 21/61, H04N 21/6405, H04N 21/6408, H04N 19/61

(54) **Verfahren zum Auslesen von Daten und Vorrichtung**
Method for reading data and device
Procédé de lecture de données et dispositif

(43) Veröffentlichungstag der Anmeldung: 15.10.2008
(73) Patentinhaber: ADTRAN GmbH, 10557 Berlin (DE)
(72) Erfinder: Kloppe, Karl, 81476 München (DE); Mück, Josef, 81675 München (DE)
(74) Vertreter: Brachmann, Roland W.

(56) Entgegenhaltungen:
- EP-A- 1 022 902
- EP-A- 1 249 966
- EP-A- 1 523 190
- WO-A-2007/018599
- US-A- 5 758 085
- US-A- 5 815 662
- US-A1- 2006 268 917
- SEDGEWICK R: "Algorithms in C. 4.6 FIFO Queues and Generalized Queues" 1998, ADDISON-WESLEY , XP002493682 * Seite 155, Zeile 14 - Zeile 29 * * Seite 155, Zeile 34 - Seite 157, Zeile 3 * * Abbildung 4.8 * * Programm 4.11 *
- SAKAMOTO H ET AL: "LIVE-ON-DEMAND" JAPAN TELECOMMUNICATION REVIEW, TELECOMMUNICATIONS ASSOCIATION. TOKYO, JP, Bd. 10, Nr. 1, 1. Januar 1998 (1998-01-01), Seiten 60-71, XP000729760 ISSN: 0915-2334
- BUDDHIKOT M M ET AL: "Design of a large scale multimedia storage server" COMPUTER NETWORKS AND ISDN SYSTEMS, NORTH HOLLAND PUBLISHING. AMSTERDAM, NL, Bd. 27, Nr. 3, 1. Dezember 1994 (1994-12-01), Seiten 503-517, XP004037983 ISSN: 0169-7552

## Beschreibung

US 2006/0268917 A1 betrifft ein System und ein Verfahren zum Verwalten von Datenströmen mit Videoinhalt.

EP 1 523 190 A betrifft einen schnellen Kanalwechsel.

[Sedgewick R.: Algorithms in C. 4.6 FIFO Queues and Generalized Queues, 1998, Addison-Wesley] betrifft Algorithmen in der Programmiersprache C.

WO 2007/018599 A betrifft eine Verwaltung eines lokalen Netzwerks.

EP 1 249 966 A2 betrifft eine Vorrichtung, ein Programm und ein Verfahren zur Netzwerkverwaltung und Computernetzwerksystem.

[Sakamoto H. et al.: Live-on-Demand, Japan Telecommunication Review, Telecommunications Association, Tokyo, Band 10, Nr. 1, 1998] betrifft Video-on-Demand-Systeme mit einem Live-on-Demand (LOD) Konzept.

US 5,815,662 A betrifft den vorausschauenden Einsatz einer Cache-Speicherung für Medien-on-Demand-Systeme.

Die Erfindung betrifft unter anderem ein Verfahren zum Auslesen von Daten. Das Verfahren enthält:
- Speichern von Daten einer Datenfolge in einer Speichereinheit,
- erstes Auslesen von Daten der Datenfolge für einen ersten Teilnehmer.

Die Datenfolge kann ein Multimediadatenstrom sein, der Bilddaten und Sprachdaten enthält. Die Daten können digitale Daten sein und können komprimiert werden, um die erforderliche Zugriffsrate beim Lesen bzw. Schreiben der Speichereinheit zu verringern. Die Komprimierung kann darauf beruhen, die Unterschiede zwischen zwei Vollbildern zu berechnen und nur das eine Vollbild und Daten bzgl. der Unterschiede zu übertragen. Bspw. kann die Komprimierung gemäß MPEG (Moving Pictures Expert Group) durchgeführt werden, insbesondere MPEG4, oder gemäß einem anderen Komprimierungsverfahren, wie z.B. ITU-T (International Telecommunications Union - Telecommunications Standardization Sector) H.264 oder H.261.

Der Zugriff auf komprimierte Videodaten kann bspw. nur ausgehend von einem Vollbild in hoher Wiedergabequalität erfolgen. Demzufolge lässt sich die Umschaltzeit verkürzen, wenn jederzeit ein Vollbild verfügbar ist. Die Speichereinheit kann dazu verwendet werden, bspw. weniger als die letzten 30 Sekunden der Multimediadaten zu speichern, um Zugriff auf ein, zwei oder drei Vollbilder zu haben, bzw. auf mehr als drei Vollbilder. Das Vollbild wird bspw. gemäß MPEG als I-Frame (Intra coded frame) bezeichnet. Gemäß H.264 wird ein Vollbild als IDR-Picture - Instantaneous Decoder Refresh) bezeichnet. Ein Vollbild enthält keine Informationen anderer Rahmen bzw. Bilder.

Jedoch sind kein Lösungen bekannt, mit deren Hilfe für mehrere Teilnehmer die Umschaltzeit verkürzt werden kann, wenn der Multimediadatenstrom nur in einer Speichereinheit zwischengespeichert wird.

Es ist Aufgabe der Erfindung, ein einfaches Verfahren zum Auslesen von Daten anzugeben sowie zugehörige Vorrichtungen. Insbesondere soll die Datenrate für den Zugriff auf die Speichereinheit klein sein, so dass auch der Aufwand für die Weitervermittlung der Daten klein ist.

Die auf das Verfahren gerichtete Aufgabe wird durch ein Verfahren mit den im Patentanspruch 1 angegebenen Verfahrensschritten gelöst. Weiterbildungen sind in den Unteransprüchen angegeben.

Zusätzlich zu den eingangs genannten Verfahrensschritten wird bei dem erfindungsgemäßen Verfahren der folgende Verfahrensschritt durchgeführt:
- vom ersten Auslesen getrenntes zweites Auslesen der Daten der Datenfolge für einen zweiten Teilnehmer, insbesondere so, dass beide Teilnehmer in Echtzeit dieselben Videodaten sehen können, z.B. mit einem Zeitversatz kleiner als 15 Sekunden bezogen auf den anderen Teilnehmer.

Durch diese Maßnahme muss die Datenfolge nur einmal in der Speichereinheit gespeichert werden. Dennoch kann die Datenfolge für mehr als einen Teilnehmer genutzt werden, um die Umschaltzeit zu verkürzen. Die beim zweiten Auslesen ausgelesenen Daten können bereits für den ersten Teilnehmer ausgelesen worden sein.

Die Speichereinheit ist insbesondere ein Speicher mit wahlfreiem Zugriff, z.B. ein RAM (Random Access Memory). Alternativ können andere Speicher verwendet werden, z.B. magnetische Festplattenspeicher.

Bei dem Verfahren können die Auslesevorgänge des ersten Auslesens und des zweiten Auslesens aneinander angeglichen werden. Nach dem Angleichen kann für den ersten Teilnehmer und für den zweiten Teilnehmer zusammengefasst ausgelesen werden.

Dieses Vorgehen ermöglicht es, die Datenrate für das Lesen der Speichereinheit nach dem Angleichen zu verringern, insbesondere bei zwei Teilnehmern, für die gleichzeitig auf die Speichereinheit zugegriffen wird, die Datenrate zu halbieren. Der Aufwand für das Weiterverteilen der zusammengefassten Datenströme kann ebenfalls erheblich verringert werden, insbesondere durch nur eine einzige Übertragung auf gemeinsamen Datenübertragungsabschnitten für den ersten Teilnehmer und für den zweiten Teilnehmer.

Vor dem Zusammenfassen können die Daten zu den Teilnehmern jeweils im Unicast-Modus übertragen werden. Nach dem Angleichen kann eine Multicast-Datenübertragung für beide Teilnehmer verwendet werden.

Alternativ kann vor dem Zusammenfassen für den ersten Teilnehmer Multicast und für den zweiten Teilnehmer Unicast verwendet werden, wobei der erste Teilnehmer einziges Mitglied der betreffenden Multicastgruppe sein kann oder es bereits mehrere Mitglieder in dieser Multicastgruppe geben kann. Nach dem Angleichen kann bei der Alternative für beide Teilnehmer Multicast übertragen werden, insbesondere in der gleichen Multicastgruppe.

Der Unicastmodus ist eine Datenübertragung, die explizit nur für einen Nutzer adressiert ist. Der Multicastmodus ist eine Datenübertragung, die explizit für ein Gruppe von Nutzern adressiert ist, wobei die Gruppe ein Anzahl von Mitgliedern haben kann, die im Bereich von Null bis n, liegt, wobei n eine natürliche Zahl ist, insbesondere größer als Eins.

Das Angleichen kann dadurch erfolgen, dass die Leseraten für die Teilnehmer voneinander verschieden gewählt werden. Vor dem Angleichen können die Leseraten für die Teilnehmer voneinander verschieden und größer als die Rate zum Schreiben in den Speicher gewählt werden. Nach dem Angleichen kann mit gleicher Rate in den Speicher geschrieben und aus dem Speicher gelesen werden. Jedoch kann das Angleichen auch durch andere Maßnahmen erfolgen.

Bei einer nächsten Weiterbildung wird ein erster Lesezeiger verwendet, der die Datenposition für das Auslesen der Daten für den ersten Teilnehmer in der Speichereinheit angibt. Ein zweiter Lesezeiger gibt die Datenposition für das Auslesen der Daten für den zweiten Teilnehmer an. Dabei kann ein Zeiger eine Speicherzelle an einer festen Speicheradresse sein, wobei diese Speicherzelle ihrerseits ein Datum enthält, das eine Adresse angibt, nämlich die Adresse, an der der nächste Zugriff erfolgen soll. In diesem Zusammenhang wird der Zeiger auch als "Pointer" bezeichnet. Das Verwenden von Lesezeigern ist eine einfache Maßnahme, um eine Zugriffsposition zu vermerken.

Bei einer nächsten Weiterbildung, wird in der Speichereinheit ein Schreibzeiger verwendet, der die Datenposition angibt, an der ankommende Daten in die Speichereinheit geschrieben werden. Es ist ausreichend für die Speichereinheit nur einen einzigen Schreibzeiger zu verwenden, weil die geschriebenen Daten dann für eine Vielzahl von Teilnehmern ausgelesen werden können, bspw. mit mehreren Unicasts, mit einem Multicast oder sowohl mit mindestens einem Unicast als auch mit mindestens einem Multicast. Weiterhin kann ein Multicastzeiger verwendet werden, der die Datenposition für das Auslesen nach dem Zusammenfassen angibt. Es ist ebenfalls ausreichend, für die Speichereinheit nur einen einzigen Multicastzeiger zu verwenden.

Insbesondere kann der Multicastzeiger auf Daten zeigen, die in der Speichereinheit zeitlich vor Daten gespeichert worden sind, auf die der zweite Lesezeiger vor dem Angleichen zeigt. Somit laufen die Werte der Multicastzeiger denen des zweiten Lesezeigers voraus. Gemäß Multicastzeiger können insbesondere die eingeschriebenen Daten so schnell wie möglich wieder ausgelesen werden, so dass die Verzögerung durch das Speichern in der Speichereinheit gering ist.

Die Daten können komprimierte Daten enthalten, insbesondere komprimierte Videodaten und Sprachdaten, wobei neben den komprimierten Daten auch unkomprimierte oder nur vergleichsweise gering komprimierte Daten vorhanden sein können. So können Vollbilder im Vergleich zu Differenzbildern weniger stark komprimiert sein, bspw. nur hinsichtlich einer Lauflängencodierung.

Das Auslesen für den zweiten Teilnehmer kann mit dem Auslesen von unkomprimierten Daten oder im Vergleich zu anderen Daten der Datenfolge vergleichsweise gering kodierten Daten beginnen, bspw. mit einem Vollbild. So kann für den zweiten Teilnehmer die Umschaltzeit erheblich verkürzt werden, weil nach dem Empfang des Vollbildes sofort mit der Darstellung begonnen werden kann.

Die Daten für den zweiten Teilnehmer können schneller als dieselben Daten für den ersten Teilnehmer ausgelesen werden, d.h. insbesondere mit höherer Datenrate. So lässt sich das Angleichen hin zu Daten der Datenfolge durchführen, die eine Echtzeitübertragung mit geringer Verzögerung ermöglicht.

Die gelesenen Daten können in der Speichereinheit überschrieben werden bevor gleichzeitig z.B. drei Vollbilder oder bevor gleichzeitig z.B. vier Vollbilder gespeichert werden. Somit liegt ein zyklisches Beschreiben vor, das einem Löschen der überschriebenen Daten gleichkommt. Durch diese Maßnahme lässt sich der Speicherbedarf für die Speichereinheit erheblich reduzieren.

In einer Datenbank kann vermerkt werden, dass ein Teilnehmer einen Multicast erhalten soll. Es kann zunächst vermerkt werden, dass noch keine Freigabe für diesen Teilnehmer erfolgt ist. Damit kann auf einfache Art der Zeitpunkt gesteuert werden, zu dem ein Umschalten von Unicast auf Multicast erfolgen soll. Die Freigabe kann nämlich sofort nach dem Angleichen erfolgen.

Eine Speichereinheit kann das Angleichen durchführen. Dazu kann einer Speicherverwaltungseinheit der Speichereinheit signalisiert werden, welcher Teilnehmer welche Datenfolge erhalten soll. So können den Teilnehmern eigene VLAN Kennzeichen zugeordnet sind. Das betreffenden VLAN Kennzeichen kann dann von der Speichereinheit zur Adressierung der ausgelesenen Datenfolgen bei der weiteren Übertragung verwendet werden.

Außerdem kann ein VLAN-Kennzeichen verwendet werden, dass keinem Teilnehmer zugeordnet ist, und mit dem die Speichereinheit eine Datenfolge kennzeichnet, die gemäß Multicast verteilt werden soll. Dies ist ein einfaches Verfahren, um einer Verteileinheit das Vorliegen eines neuen Multicasts zu signalisieren, bspw. von der Speichereinheit aus.

Durch dieses Vorgehen kann ebenfalls auf einfache Art mehreren Teilnehmern eine kurze Umschaltzeit beim Umschalten auf die in der Speichereinheit enthaltende Datenfolge ermöglicht werden. Jeder Teilnehmer hat seinen Lesezeiger, dessen Werte sich dann bspw. mit der gleichen Geschwindigkeit wie die Werte anderer Lesezeiger erhöhen.

Insbesondere bei der Variante ohne Angleichen aber auch bei der Variante mit Angleichen kann eine maximale Anzahl von Teilnehmern festgelegt werden, für die Daten aus der Speichereinheit ausgelesen werden. Bei der Variante ohne Angleichen kann es nämlich besonders schnell zu Engpässen bezüglich der Zugriffsrate kommen.

Beim Überschreiten der maximalen Anzahl kann die Datenfolge zusätzlich auch ohne Nutzen der Speichereinheit verteilt werden, wobei jedoch keine kurze Umschaltzeit mehr gewährleistet ist. Dies ist jedoch besser als die Dienstanforderung abzulehnen, nämlich die Verteilung der Datenfolge auch zu einem weiteren Teilnehmer hin.

Gemäß einem weiteren Aspekt der Erfindung wird ein Verfahren angegeben, bei dem die folgenden Merkmale realisiert werden:
- Erfassen der in einer Zeitspanne abgerufenen Datenfolgen,
- Ermitteln einer Datenfolge, die eine hohe Abrufquote im Vergleich zu mindestens einer anderen abgerufenen Datenfolge hat,
- automatisches Zuordnen einer Speichereinheit zu der Datenfolge mit der hohen Abrufquote, wobei die Speichereinheit als eine Datenpuffereinheit verwendet wird, mit deren Hilfe die Umschaltzeit für das Umschalten auf die Datenfolge mit der hohen Abrufquote verkürzt wird.

Durch dieses Vorgehen kann eine begrenzte Anzahl von Speichereinheiten optimal genutzt werden. Die genannten Schritte werden insbesondere automatisch durchgeführt, d.h. insbesondere ohne manuelle Eingriffe.

Die Zeitspanne liegt beispielsweise im Bereich von einer Woche bis zu einem Monat oder mehreren Monaten. Auch kann die Zeitspanne ein "gleitendes Zeitfenster" sein, das sich beispielsweise tageweise verschiebt.

Die Datenfolge kann ein Fernseh-Programm umfassen. Somit werden diejenigen Programme den zur Verfügung stehenden Speichereinheiten zugeordnet, die am häufigsten gesehen werden. Alternativ kann die Datenfolge die Daten eines Videofilms betreffen.

Alternativ sind in der Datenfolge nur die Daten einer einzigen Fernseh-Sendung enthalten, bspw. einer Sportsendung, eines Politmagazins, einer Nachrichtensendung oder einer Folge einer Serie, die bspw. wöchentlich oder täglich übertragen wird. Es kann auf eine Fernseh-Programmdatenbank zugegriffen werden, um die Sendung und/oder die Zeit ihrer erneuten Verteilung zu ermitteln.

Mindestens einer Speichereinheit kann auch manuell ein Programm oder einer Sendung fest zugeordnet werden. Beispielsweise werden häufig gesehene öffentliche oder private Fernseh-Programme Speichereinheiten fest zugeordnet.

Es kann mindestens eine Datenbasis verwendet werden, in der gespeichert wird, welche Datenfolgen über eine Speichereinheit und welche Datenfolgen direkt verteilt werden. Damit kann eine Teilnehmeranforderung zum Umschalten auf eine Datenfolge bzw. ein Programm/Sendung schnell einer Speichereinheit oder alternativ einem Multicaststrom zugeordnet werden, der ohne Nutzung einer Speichereinheit verteilt wird, d.h. direkt.

Ein weiterer Aspekt, der auch unabhängig von den anderen Aspekten durchgeführt werden kann, betrifft ein Verfahren zum Auslesen von Daten mit den Schritten:
- Speichern von Daten einer Datenfolge in einer Speichereinheit,
- automatisches Festlegen des für das Speichern der Datenfolge in der Speichereinheit zur Verfügung stehenden Speicherbedarfs.

Durch dieses Verfahren kann gewährleistet werden, dass der Speicherbedarf extremen Schwankungen angeglichen werden kann. Beim Speichern mehrerer Datenfolgen gibt es Mittelungseffekte, so dass eine zur Verfügung stehende Speichermenge optimal genutzt werden kann. Beispielsweise wird zum Speichern von Standbildern erheblich weniger Speicher benötigt als zum Speichern von handlungsreichen Bildsequenzen. Weiterhin kann abhängig von der Datenquelle bspw. der zeitliche Abstand zwischen Vollbildern erheblich abweichen.

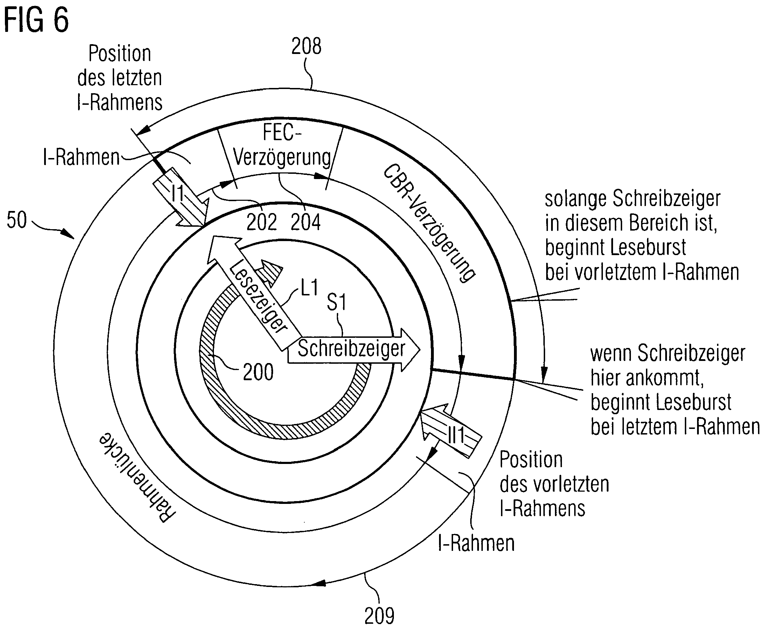

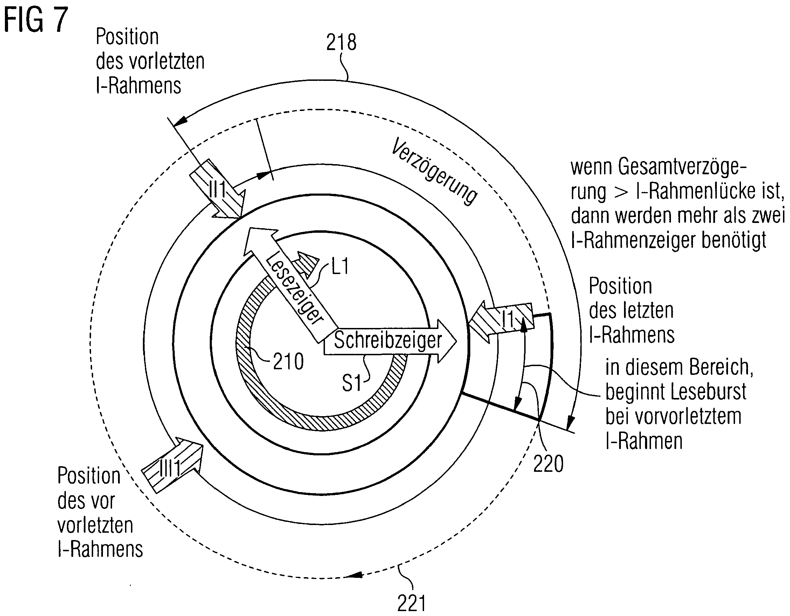

Somit kann das Festlegen abhängig von der Datenmenge pro Bild und/oder pro Bildsequenz erfolgen. Der Speicherbedarf kann automatisch erhöht werden, weil auf ein vorvorletztes Vollbild zugegriffen werden muss. Dies wird in Zusammenhang mit der Figur 7 unten näher erläutert. Alternativ kann der Speicherbedarf automatisch verringert werden, weil nur noch auf ein vorletztes Vollbild jedoch nicht mehr auf ein vorvorletztes Vollbild zugegriffen werden muss, wie unten bespielhaft an Hand der Figur 6 erläutert wird.

Zum Festlegen des Speicherbedarfs kann die Datenfolge analysiert werden. Insbesondere wenn die Datenfolge komprimierte Daten enthält, kann bezüglich mindestens eines der folgenden Parameter analysiert werden:
- zeitlicher Abstand von unkomprimierten Daten bzw. Vollbildern,
- Blockgröße einer Vorwärtsfehlerkorrektur,
- konstante Bitraten-Verzögerung.

Der zeitliche Abstand von unkomprimierten Bildern kann über die Auswertung eines Kopffeldes in einem Datenpaket erfolgen, insbesondere des Random Access Indicator Feldes gemäß MPEG oder eines entsprechenden Datenfeldes gemäß H.264 oder einem anderen Datenübertragungsverfahren.

Weiterhin ist eine Vorrichtung zum Auslesen von Daten betroffen, die die Einheiten gemäß Anspruch 27 enthält.

Somit ist die Vorrichtung insbesondere zum Ausführen der oben erläuterten Verfahren mit Angleichen und ohne Angleichen geeignet, so dass auch die oben genannten technischen Wirkungen gelten.

Alternativ kann eine Steuereinheit in der Vorrichtung enthalten sein, die die Ausleseinheiten unabhängig voneinander steuert, so dass insbesondere kein Angleichen der Lesevorgänge erfolgt.

Gemäß einem weiteren Aspekt ist eine Vorrichtung betroffen, die enthält:
- eine Erfassungseinheit, die zum Erfassen der in einer Zeitspanne abgerufen Datenfolgen geeignet ist oder verwendet wird,
- eine Ermittlungseinheit, die zum Ermitteln einer Datenfolge, die eine hohe Abrufquote im Vergleich zu mindestens einer anderen abgerufenen Datenfolge hat, geeignet ist oder verwendet wird, und
- eine Zuordnungseinheit, die zum automatischen Zuordnen einer Speichereinheit zu der Datenfolge mit der hohen Abrufquote geeignet ist oder verwendet wird, wobei die Speichereinheit als eine Datenpuffereinheit verwendet wird, mit deren

Hilfe die Umschaltzeit für das Umschalten auf das Programm mit der hohen Abrufquote verkürzt wird.

Diese Vorrichtung dient insbesondere zum einfachen, effektiven und automatischen Zuordnen einer begrenzten Anzahl von Speichereinheiten zu Programmen oder Sendungen.

Ein weiterer Aspekt, der auch unabhängig von den anderen Aspekten oder gemeinsam mit diesen angewendet wird betrifft eine Vorrichtung, die die folgende Einheit enthält:
- eine Festlegungseinheit, die zum automatisches Festlegen des für das Speichern der Datenfolge in der Speichereinheit zur Verfügung stehenden Speicherbedarfs geeignet ist oder verwendet wird.

Dies Vorrichtung gewährleistet eine gute Nutzung der zur Verfügung stehenden Speicherkapazität. Insbesondere wenn mehrere Speichereinheiten bspw. in einem gemeinsamen Speicherbaustein realisiert werden.

Soweit in dieser Anmeldung "kann" bzw. "können" verwendet wird, soll sowohl die tatsächliche technische Realisierung als auch die Möglichkeit einer solchen Realisierung gemeint sein. Die folgenden Figuren dienen nur der Illustration und sollen die Erfindung nicht beschränken. Im folgenden werden Ausführungsbeispiele der Erfindung mit Bezug auf die Figuren erläutert, worin:
- Figur 1: eine Zugangsknoteneinheit zeigt, in der aus einem Ringspeicher getrennt für zwei Teilnehmer ausgelesen wird,
- Figur 2: die Zugangsknoteneinheit zeigt, wobei aus dem Ringspeicher gemeinsam für die zwei Teilnehmer ausgelesen wird,
- Figur 3: mehrere Ringspeicher und Datenzeiger zeigt, die für den Zugriff auf die Ringspeicher verwendet werden,
- Figur 4: die Zuordnung von Datenzeigern zu den Ringspeichern zeigt,
- Figur 5: eine Auswahlvorrichtung zeigt, mit der Programme/Sendungen ausgewählt werden, bei deren Übertragung die Ringspeicher verwendet werden,
- Figur 6: einen Ringspeicher zeigt, dessen Speicherkapazität die Speicherung von jeweils zwei Vollbildern ermöglicht,
- Figur 7: einen Ringspeicher zeigt, dessen Speicherkapazität die Speicherung von jeweils drei Vollbildern ermöglicht, und
- Figur 8: einen Ethernetrahmen zeigt, der zur Übertragung von MPEG-Daten verwendet wird.

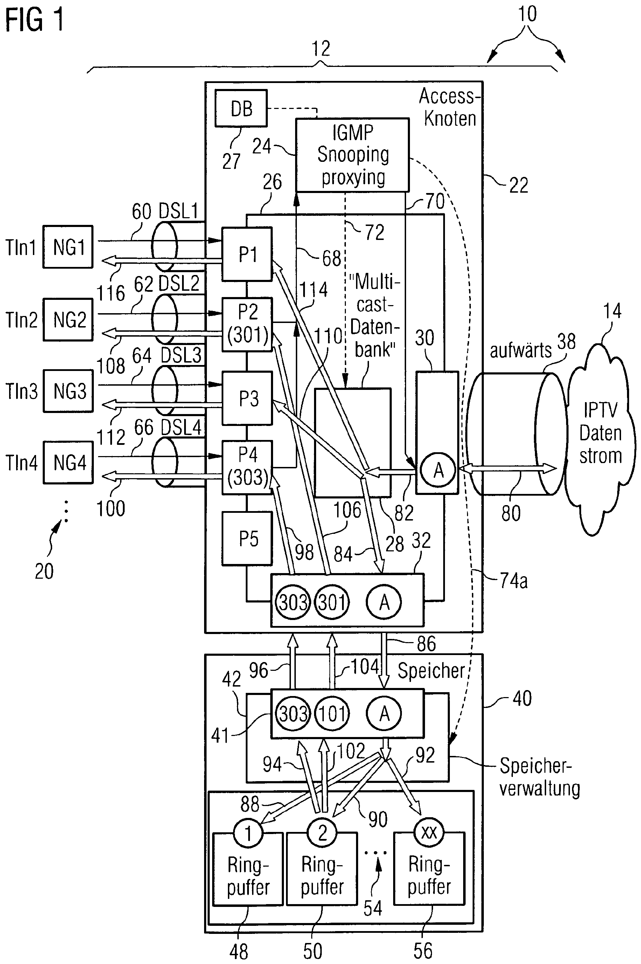

Figur 1 zeigt eine Zugangsknoteneinheit 22, in der aus einem Ringspeicher 50 getrennt für zwei Teilnehmer ausgelesen wird. Die Zugangsknoteneinheit 22 ist Bestandteil eines Datenübertragungsnetzwerks 10. Das Datenübertragungsnetzwerk 10 enthält ein Zugangsnetzwerk 12 und ein Hauptnetzwerk 14. Das Zugangsnetzwerk ist bspw. ein Ethernet, d.h. ein Netzwerk bzw. Netz in dem auf Protollschicht zwei gemäß OSI Protokollsstapel vermittelt wird, d.h. "Switching". Das Hauptnetzwerk 14 ist dagegen ein Netzwerk, in dem Datenpakete auf Protokollschicht drei vermittelt werden, d.h. "Routing". Ein geeignetes Schicht drei Protokoll für das Hauptnetzwerk 14 ist das Internet Protocol IP.

Der Access-Node bzw. die Zugangsknoteneinheit 22 erhält einen IPTV (Internet Protocol TeleVision) Datenstrom 80 von einem Video-Encoder. Der Datenstrom 80 wird weitergeleitet zu einer Speichereinheit 40, wo die Fernsehkanäle in Ringpuffern bzw. Ringspeichern 48 bis 56 zwischengespeichert werden. Die einzelnen Teilnehmer Tln2, Tln4 und weitere Teilnehmer 20 werden über ihre DSL-Leitung DSL1 bis DSL4 mit TV-Strömen 108 und 100 versorgt, die aus den Ringspeichern ausgelesen werden, z.B. aus dem Ringspeicher 50. Am Stelle von DSL-Leitungen DSL! bis DSL4 und/oder zusätzlich lassen sich auch andere Übertragungsverfahren einsetzen, insbesondere drahtlose oder optische.

Im Detail enthält die Zugangsknoteneinheit 22:
- eine Steuereinheit 24,
- eine Paketvermittlungseinheit 26,
- eine Multicastdatenbank 28,
- eine netzseitige Schnittstelle 30,
- eine Schnittstelle 32 zur Speichereinheit 40 hin, sowie
- Anschluss-Ports P1 bis P5, sowie weiter nicht dargestellte Ports.

Im Ausführungsbeispiel ist die Zugangsknoteneinheit 22 in einem integrierten Schaltkreis realisiert. Bei anderen Ausführungsbeispielen sind die Elemente der Zugangsknoteneinheit 22 auch in mehr als einem Netzelement angeordnet.

Die Steuereinheit 24 führt ein sogenanntes Snooping durch, d.h. sie prüft, Steuernachrichten, die eigentlich nur weitergeleitet werden sollen, insbesondere Steuernachrichten gemäß IGMP (Internet Group Multicast Protocol). Für einige dieser Steuernachrichten führt die Steuereinheit 24 ein sogenanntes Proxying durch, d.h. sie bearbeitet diese Nachrichten ohne sie weiterzuleiten. So muss bspw. ein Videodatenstrom, der bereits zur Zugangsknoteneinheit 22 im Videodatenstrom 80 gelangt, nicht erneut angefordert werden, sondern kann gleich an den Teilnehmer verteilt werden, der die betreffende IGMP Nachricht erzeugt hat.

Die Paketvermittlungseinheit 26 führt ein Switching durch, wobei bspw. Kennzeichen für virtuelle lokale Netze berücksichtigt werden, d.h. sogenannte VLANs (Virtual Local Area Network). Dies wird unten näher erläutert.

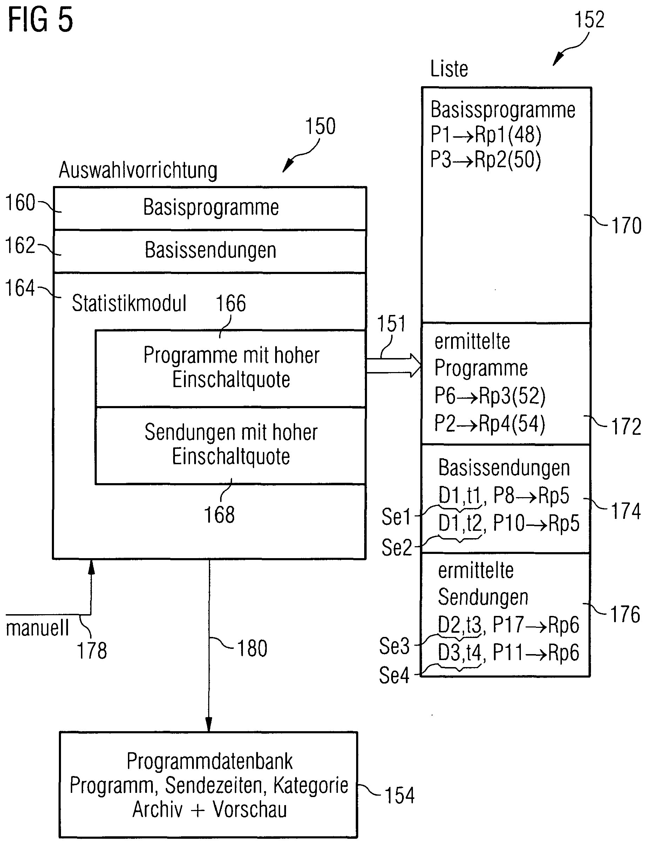

Eine Datenbank 27 wird bspw. manuell erstellt oder unter Verwendung automatischer Verfahren, wie unten bspw. an Hand der Figur 5 erläutert. Der Datenbank 27 ist insbesondere zu entnehmen, welche Programme direkt, d.h. ohne Verwenden der Speichereinheit 40 verteilt werden sollen und welche Programme unter Verwendung der Speichereinheit 40 verteilt werden sollen. Die Steuereinheit 24 hat Zugriff auf die Datenbank 27.

Die Multicastdatenbank 28 enthält Einträge darüber, welcher Multicast an welche Ports P1 bis P5 weiterzuleiten ist. Diese Einträge werden von der Steuereinheit 24 abhängig von den IGMP-Steuernachrichten aktualisiert, d.h. abhängig von den Anforderungen der Teilnehmer. Auch ist in der Multicastdatenbank 28 vermerkt, dass die ankommenden Videodaten bspw. auch vollständig oder gemäß ausgewählter Programme an die Schnittstelle 32 weitergeleitet werden sollen.

Die netzseitige Schnittstelle 30 ist an eine Verbindung 38 angeschlossen und so mit dem Hauptnetzwerk 14 verbunden. Bspw. gelangen die Videodaten 80 in das Hauptnetzwerk 14 über eine Satellitenverbindung. Die Schnittstelle 30 empfängt im Ausführungsbeispiel die Videodaten 80 von einer einzigen Videoquelle. Bei anderen Ausführungsbeispielen empfängt die Schnittstelle 30 Videodaten von weiteren Videoquellen. Die Videodaten 80 sind einem VLAN mit einem Kennzeichen A zugeordnet.

Die Schnittstelle 32 sendet zur Speichereinheit 40 hin die Daten des VLANS mit dem Kennzeichen A. Die Schnittstelle 32 empfängt von der Speichereinheit 40 zunächst zwei Unicast-Datenströme für VLANS 301 bzw. 303. Die Anbindung der Schnittstelle 32 an eine Schnittstelle 41 der Speichereinheit 40 wird weiter unten näher erläutert.

Die Anschlussports P1 bis P4 sind in dieser Reihenfolge verbunden mit den DSL-Leitungen DSL1 bis DSL4. Die Leitung DSL1 führt vom Port P1 zu einem Nutzergerät NG1 des Teilnehmers Tln1. Die Leitung DSL2 liegt zwischen dem Port P2, das im Beispiel dem VLAN 301 zugeordnet ist, und einem Nutzergerät NG2 des Teilnehmers Tln2. Die Leitung DSL3 liegt zwischen dem Port P3 und einem Nutzergerät NG3. Schließlich liegt die Leitung DSL4 zwischen dem Port P4, das dem VLAN 303 zugeordnet ist, und einem Nutzergerät NG4.

Die Nutzergeräte NG1 bis NG4 sind beispielsweise Endgeräte, z.B. so genannte Set Top Boxen STB, oder auch Netzübergangseinheiten bzw. Gateways, bspw. zu einem privaten lokalen Datenübertragungsnetz oder zu einem Firmennetz.

Die Speichereinheit 40 enthält die Ringspeicher 48 bis 56 sowie eine Speicherverwaltungseinheit 42, die den Zugriff auf die Ringspeicher 48 bis 56 steuert. Optional teilt die Speicherverwaltungseinheit 42 den Ringspeichern 48 bis 56 auch Speicherkapazität zu, was unten an Hand der Figuren 6 und 7 näher erläutert wird.

Im Ausführungsbeispiel ist die Speichereinheit 40 als ein integrierter Schaltkreis realisiert. Bei anderen Ausführungsbeispielen sind die Elemente der Speichereinheit 40 auf mehrere Einheiten verteilt. So kann der Zugriff auf die Ringspeicher 48 bis 56 auch von einem externen Prozessor gesteuert werden.

In der Speichereinheit 40 ist außerdem vermerkt, welcher Ringspeicher 48 bis 56 welchem Programm zugeordnet ist, bspw. über die Multicastadresse des betreffenden Programms, insbesondere eine IP-Multicastadresse oder eine MAC-Multicastadresse.

Die Speichereinheit 40 hat eine Schnittstelle 41 zu der Zugangsknoteneinheit 22 hin, die Schnittstelle 41 entspricht der Schnittstelle 32, d.h. sie empfängt die Programmauswahl des Datenstroms des VLAN mit dem Kennzeichen A bzw. den vollständigen Datenstrom und sendet die Unicast-Datenströme der VLANs mit den Kennzeichen 301 bzw. 303 zu den Ports P2 und P4.

In Figur 1 sind weiterhin IGMP-Steuernachrichten 60 bis 66 gezeigt, mit denen die Teilnehmer Tln1 bis Tln4 Videodaten anfordern. Die Steuernachrichten 60 bis 66 gelangen über die Ports P1 bis P4 zu der Steuereinheit 24, siehe interne Steuernachrichten 68. Die Steuereinheit 24 aktualisiert die Multicastdatenbank 28 abhängig von den Steuernachrichten 68, siehe Datenbankzugriff 72. Bspw. wird eingetragen, an welche Ports P1 bis P4 die ankommenden Multicastströme jeweils weitergeleitet werden sollen, was unten näher erläutert wird. Einige Steuernachrichten 70 werden von der Steuereinheit auch an das Hauptnetzwerk 14 weitergeleitet, bspw. um ein zusätzliches Programm anzufordern.

Wählt bspw. der Teilnehmer Tln2 das im Ringspeicher 50 gepufferte Programm aus, so ermittelt die Steuereinheit 24 mit Hilfe der Datenbank 27, dass es sich um ein Programm handelt, das unter Verwendung des Ringspeichers 52 verteilt werden soll bzw. ggf. schon verteilt wird. Deshalb signalisiert die Steuereinheit 24 der Speicherverwaltung 42 dass ein erster Lesevorgang der Speichereinheit 40 eingeleitet werden soll, siehe Pfeil 74a. Der Speicherverwaltung 42 wird mitgeteilt welches Programm über welches VLAN verteilt werden soll, d.h. das Programm im Ringspeicher 50 über VLAN 301. An Stelle eines Kennzeichens für den Ringspeicher 50 kann auch die Multicastadresse mitgeteilt werden, die das im Ringspeicher 50 gespeicherte Programm hat.

Gleichzeitig erzeugt die Steuereinheit 24 einen Eintrag in der Multicastdatenbank 28, wonach der Multicaststrom, der diesem Programm zugeordnet ist später auch an den Teilnehmer Tln2 weitergeleitet werden soll. Ein Multicast wird aber noch nicht an den Teilnehmer Tln2 gesendet, weil zunächst Videodaten des betreffenden Programms nicht unter einem bestimmten VLAN Kennzeichen D als Multicast eintreffen und weil für den Teilnehmer Tln2 auch noch keine Freigabe erfolgt ist, wie weiter unten noch näher erläutert wird.

Es sei angenommen, dass der Teilnehmer Tln4 wenige Sekunden, z.B. weniger als 10 Sekunden, nach dem Teilnehmer Tln2 auf das Programm umschalten möchte, das mit Hilfe des Ringspeichers 50 verteilt wird. Insbesondere ist im Beispiel also noch kein Multicast für den Teilnehmer Tln2 bzgl. dieses Programms veranlasst. Somit signalisiert die Steuereinheit 24 der Speicherverwaltung 42 auch, dass ein zweiter Lesevorgang der Speichereinheit 40 eingeleitet werden soll, siehe Pfeil 74a. Der Speicherverwaltung 42 wird bspw. mitgeteilt, welches Programm über welches VLAN verteilt werden soll, d.h. das Programm im Ringspeicher 50 über VLAN 303. An Stelle eines Kennzeichens für den Ringspeicher 50 kann bspw. auch die Multicastadresse mitgeteilt werden, die das im Ringspeicher 50 gespeicherte Programm hat.

Auch vermerkt die Steuereinheit 24 in der Multicastdatenbank, dass auch Teilnehmer Tln4 Mitglied der betreffenden Multicastgruppe wird, bspw. durch Vermerken des VLAN Kennzeichens 303 und/oder der Portnummer des Ports P4. Zunächst wird jedoch an den Teilnehmer Tln4 ein Unicast gesendet. Ein Multicast wird aber noch nicht an den Teilnehmer Tln4 gesendet, weil zunächst Videodaten des betreffenden Programms nicht unter einem bestimmten VLAN Kennzeichen D als Multicast eintreffen und weil für den Teilnehmer Tln4 auch noch keine Freigabe erfolgt ist, wie weiter unten noch näher erläutert wird.

Somit gibt es die folgende Datenströme:
- Videodaten 84 enthalten einen Teil der Programme der Videodaten 80 bzw. 82,
- Videodaten 114 und 110 enthalten andere Programme der Videodaten 80, 82, nämlich Programme, die direkt an den Teilnehmer Tln1 bzw. Tln3 übertragen werden, d.h. ohne Verwendung der Speichereinheit 40,
- Die Videodaten 84, 86 werden programmweise auf die Speichereinheiten 48 bis 56 verteilt, siehe Videodaten 88 bis 92.
- Die Videodaten 90 der Speichereinheit 50 werden mit zwei Lesevorgängen gelesen und als Unicast 102 bzw. 94 ausgelesen. Dabei werden voneinander verschiedene VLAN Kennzeichen 301 bzw. 303 verwendet.
- Die Videodaten 102 gelangen als Videodaten 104, 106 und 118 über das VLAN 301 bzw. Port P2 zum Teilnehmer Tln2.
- Die Videodaten 94 gelangen als Videodaten 96, 98, 100 über das VLAN 303 bzw. Port P4 zum Teilnehmer Tln4.

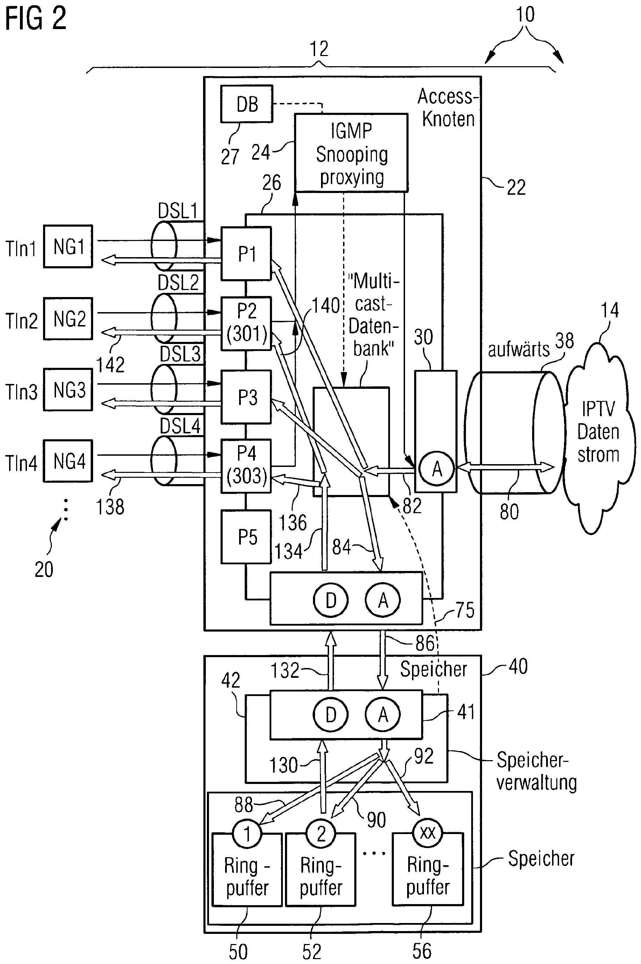

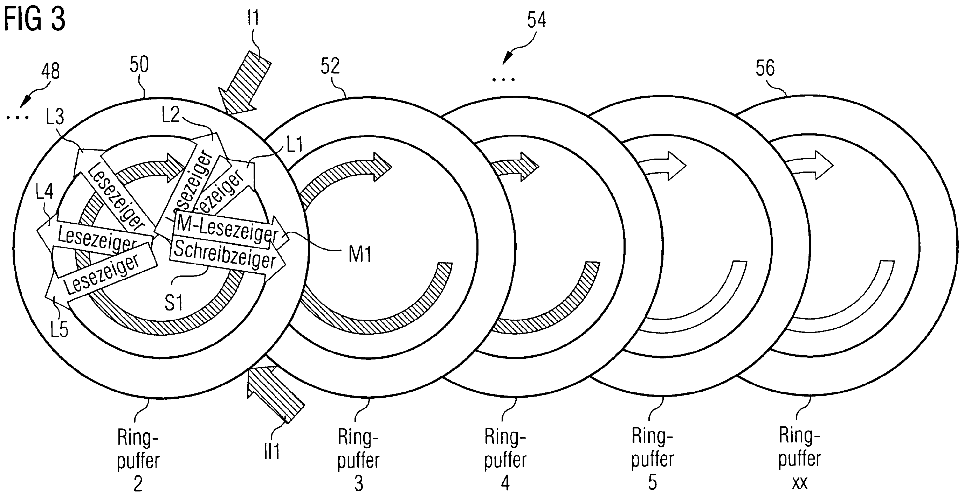

Figur 2 zeigt die Zugangsknoteneinheit 22, wobei aus der Speichereinheit 40 gemeinsam für die zwei Teilnehmer Tln2 und Tln4 ausgelesen wird. Wie unten an Hand der Figur 3 näher erläutert wird, ist dieses Zusammenfassen möglich, weil in dem Ringspeicher 50 die Lesevorgänge für die beiden Teilnehmer aneinander angeglichen werden. Sobald die Speicherverwaltung 42 erfasst, dass der Lesezeiger für den Teilnehmer Tln2 einen Multicastzeiger des Ringspeichers 50 erreicht hat, werden an Stelle der Videodaten 102 Multicast-Videodaten 130 gesendet, die im Beispiel ein VLAN Kennzeichen D haben, was anzeigt, dass Videodaten dieses VLANs D mit Hilfe der in der Multicastdatenbank 28 gespeicherten Daten an die Teilnehmer weitergeleitet werden sollen, für die bereits ein Freigabe erfolgte.

In der Multicastdatenbank 28 wird auf Veranlassung der Speicherverwaltung 42 nun vermerkt, dass Port P2 zur Multicastübertragung frei gegeben ist, siehe Pfeil 75. Das betreffende Programm ist der Speicherverwaltung 42 bekannt. Der Bezug zu dem Port lässt sich herstellen, wenn der Speicherverwaltung 42 neben dem VLAN Kennzeichen auch die Portnummer mitgeteilt wird, siehe Pfeil 74a. Alternativ werden in der Multicastdatenbank 28 von der Steuereinheit auch die VLAN Adressen gespeichert, so dass an Hand eines von der Speicherverwaltung 42 mitgeteilten VLAN Kennzeichens eine freizugebende Portnummer ermittelt werden kann, hier z.B. VLAN Kennzeichen 301.

Port P4 bleibt jedoch noch für die Multicastübertragung gesperrt, weil noch keine Freigabe erfolgt ist. Somit werden eine Zeit lang Unicast-Videodaten 94 und Multicast-Videodaten 130 aus dem Ringspeicher 50 gleichzeitig verteilt. Die Multicastvideodaten 130 werden als Videodaten 132, 134, 140 und 142 and den Teilnehmer Tln2 weitergeleitet. Auch andere Kennzeichen können zur Koordination verwendet werden.

Sobald die Speicherverwaltung 42 erfasst, dass auch der Lesezeiger für den Teilnehmer Tln4 den Multicastzeiger des Ringspeichers 50 erreicht hat, werden nur noch die Multicast-Videodaten 130 ausgelesen, d.h. auch nicht mehr die Videodaten 94. Außerdem gibt die Speicherverwaltung 42 auch das Port P4 zur Verteilung des Multicasts frei, mit dem die in der Speichereinheit 50 gespeicherten Videodaten verteilt werden, siehe Pfeil 75.

Somit gibt es nun an Stelle der Videodatenströme 94 bis 108 Multicastvideodatenströme 130, 132, 134, 140, 142 und 136, 138, wobei die Videodatenströme 136 und 138 Multicastdatenströme sind, die in der Paketvermittlungseinheit 26 zum Teilnehmer Tln4 verzweigen und somit nicht in Richtung des Teilnehmers Tln2 weitergeleitet werden.

Figur 3 zeigt die Ringspeicher 48 bis 56 und Datenzeiger, die für den Zugriff auf den Ringspeicher 50 verwendet werden. Entsprechende Zeiger werden auch für die anderen Ringspeicher 48 bzw. 52 bis 56 verwendet. Pro Fernsehkanal wird ein eigener Ringspeicher 48 bis 56 verwendet. Für jeden Ringspeicher 48 bis 56 gibt es jeweils einen Schreibzeiger und mehrere Lese-Zeiger, siehe Schreibzeiger S1 und Lesezeiger L1 bis L5 für den Ringspeicher 50. Außerdem werden die Stellen markiert, wo I-Frames abgelegt werden, siehe Rahmenzeiger I1 und II1.

Figur 3 zeigt außerdem einen Multicastlesezeiger M1 des Ringspeichers 50. Im Ausführungsbeispiel werden die mit Hilfe der Lesezeiger L1 bis L5 durchgeführten Lesevorgänge an denjenigen Lesevorgang angeglichen, der mit Hilfe des Multicastzeigers M1 durchgeführt wird. Beispielsweise ist die Leserate für die Lesezeiger L1 bis L5 jeweils höher als die Leserate für den Multicastzeiger M1, so dass sich die Werte der Lesezeiger L1 bis L5 schnell den Werten des Multicastzeiger M1 nähern.

Alle in Figur 3 gezeigten Zeiger "kreisen" in Uhrzeigerrichtung, wenn die Werte der Zeiger auf einem Kreis abgebildet werden. Die Geschwindigkeit liegt bspw. zwischen 5 bis 10 Umdrehungen pro Minute, so dass der betreffende Ringspeicher auch so oft pro Minute überschrieben wird.

Beispielsweise wird der Lesezeiger L1 für den Teilnehmer Tln2 verwendet, wenn die an Hand der Figuren 1 und 2 erläuterten Vorgänge ausgeführt werden. Der Lesezeiger L2 wird für den Teilnehmer Tln4 verwendet. Der Multicastzeiger M1 kann separat zu den Lesezeigern L1 bis L5 verwendet werden. Alternativ wird einer der Lesezeiger, z.B. L1, als Multicastzeiger verwendet, sobald er den Schreibzeiger S1 erreicht hat.

Durch das Beginnen des Lesens an einem I-Frame wird jedoch in allen genannten Fällen eine kurze Umschaltzeit erreicht, wenn die Ringspeicher 48 bis 56 für ein Programm/Sendung verwendet werden.

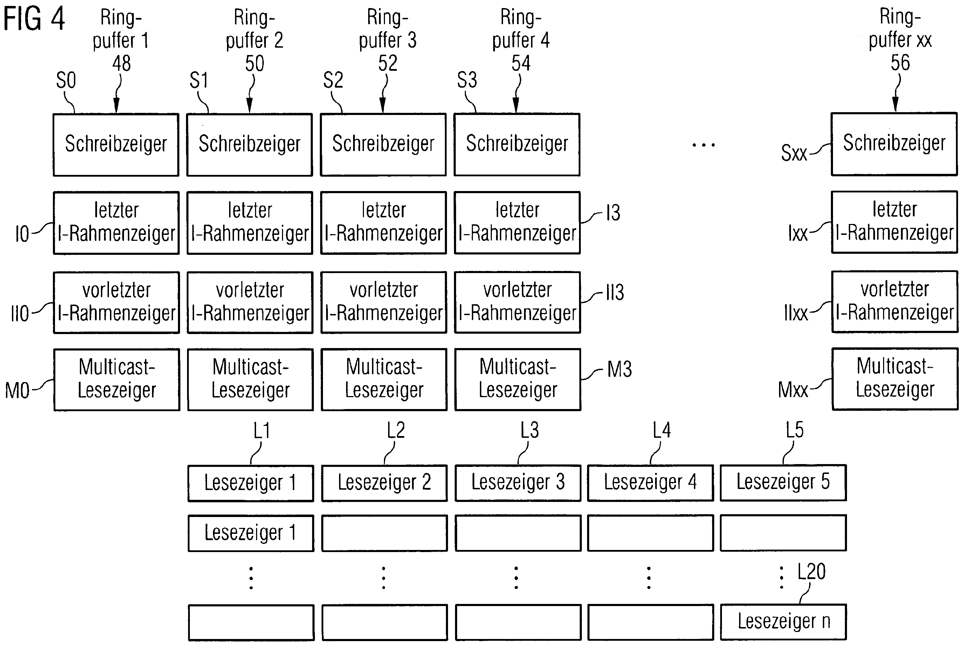

Figur 4 zeigt die Zuordnung von Datenzeigern zu den Ringspeichern 48 bis 56. Pro Ringspeicher 48 bis 56 kann eine feste Anzahl von Zeigern verwaltet werden. Die Lesezeiger für den Burst-Betrieb (read pointer 1, 2, ...) können den einzelnen Ringspeichern dynamisch zugeteilt werden.

So sind dem Ringspeicher 48 fest zugeordnet:
- ein Schreibzeiger S0,
- ein Rahmenzeiger I0 auf den letzten I-Frame,
- ein Rahmenzeiger II0 auf den vorletzten I-Frame, und
- ein Multicastlesezeiger M0.

Die Speicherzellen zum Speichern der Werte der Zeiger haben bspw. 16 Bit oder 32 Bit. Den weiteren Ringspeichern 50 bis 54 sind ebenfalls jeweils ein Schreibzeiger, ein Rahmenzeiger auf den letzten I-Rahmen, ein Rahmenzeiger auf den vorletzten I-Rahmen sowie ein Multicastlesezeiger zugeordnet.

Dem letzten Ringspeicher 56 sind fest zugeordnet:
- ein Schreibzeiger Sxx,
- ein Rahmenzeiger Ixx auf den letzten I-Frame,
- ein Rahmenzeiger IIxx auf den vorletzten I-Frame, und
- ein Multicastlesezeiger Mxx,
wobei xx eine natürliche Zahl größer als beispielsweise fünf ist.

Im Ausführungsbeispiel gibt es zwanzig Lesezeiger L1 bis L20, so dass gleichzeitig zwanzig Umschaltvorgänge durchgeführt werden können, ggf. bezogen auf ein Programm oder auf mehrere Programme.

Figur 5 zeigt eine Auswahlvorrichtung 150, mit der Programme/Sendungen ausgewählt werden, bei deren Übertragung die Ringspeicher 48 bis 56 verwendet werden sollen. Die Auswahlvorrichtung 150 enthält:
- eine Basisprogrammeinheit 160,
- eine Basissendungseinheit 162,
- eine Statistikeinheit 164,
- eine Programmermittlungseinheit 166, und
- eine Sendungsermittlungseinheit 168,
deren Funktion sich jeweils durch ein Software-Programm oder ohne Verwendung eines Programms, dass heißt nur unter Verwendung einer Schaltungsanordnung erbringen lässt.

Die Auswahlvorrichtung 150 dient zum Zuordnen von Programmen/Sendungen zu den Ringspeichern 48 bis 56. das Ergebnis wird in einer Zuordnungsliste 152 oder auf andere Art und Weise gespeichert. Das Erstellen 151 der Zuordnungsliste wird im Folgenden näher erläutert.

Die Basisprogrammeinheit 160 dient zum Festlegen von Programmen, die Ringspeichern 48 bis 56 fest zugeordnet sind. Die feste Zuordnung erfolgt bspw. durch einen Administrator, d.h. manuell. In Figur 5 ist ein Wartungszugriff 178 dargestellt, mit dem ein Programm oder eine Sendung einem Ringspeicher 48 bis 56 fest zugeordnet werden kann.

Im Ausführungsbeispiel wird ein Programm P1 fest dem Ringspeicher 48 bzw. einem Ringpuffer Rp1 zugeordnet. Ein Programm P3 wird einem Ringpuffer Rp2 fest zugeordnet, bspw. dem Ringspeicher 50. Die feste Zuordnung bleibt auch über mehrere Änderungen der Liste 52 hin erhalten. Die festen Zuordnungen sind in einem Abschnitt 170 für Basisprogramme in der Liste 152 vermerkt.

Die Basissendungseinheit 162 dient zum Festlegen von Sendungen, die Ringspeichern 48 bis 56 fest zugeordnet sind. Die feste Zuordnung erfolgt bspw. wiederum durch einen Administrator, d.h. manuell. Im Ausführungsbeispiel wird eine Sendung Se1 eines Programms P8 fest einem Ringpuffer Rp5 zugeordnet. Die Sendung Se1 wird an einem Tag D1 beginnend zu einer Zeit t1 übertragen. Eine Sendung Se2 eines Programms P10 wird dem Ringpuffer Rp5 zu einer anderen Zeit fest zugeordnet. Die Sendung Se2 wird am gleichen Tag D1 jedoch zu einer anderen Zeit t2 übertragen. Die feste Zuordnung bleibt wieder über mehrere Änderungen der Liste 52 hin erhalten. Die festen Zuordnungen von Sendungen sind in einem Abschnitt 174 für Basissendungen in der Liste 152 vermerkt. Das Ende der Sendungen kann ebenfalls in der Liste 152 vermerkt werden. Alternativ wird das Ende jedoch auf andere Art ermittelt, bspw. mit Hilfe eines Endesignals, was es ermöglicht, auch ein "Überziehen" in einer Livesendung zu berücksichtigen.

Die Statistikeinheit 164 erfasst, welche Programme/Sendungen innerhalb eines Erfassungszeitraumes wie oft gesehen worden sind. Die Statistikeinheit 164 enthält die Programmermittlungseinheit 166, mit deren Hilfe u.a. eine programmbezogene Statistik ermittelt wird. Ein vorgegebene Anzahl von Ringspeichern 48 bis 56 wird den Programmen mit der höchsten Einschaltquote zugeordnet, wobei Programme nicht berücksichtigt werden, die ein feste Zuordnung haben. Im Ausführungsbeispiel wurde ein Programm P6 als Programm mit der höchsten Einschaltquote in dem erfassten Zeitraum ermittelt. Das Programm P6 wird dem Ringpuffer Rp3 zugeordnet, der dem Ringspeicher 52 entspricht. Ein Programm P2 wurde als Programm mit der zweithöchsten Einschaltquote ermittelt und einem Ringpuffer Rp4 zugeordnet, der dem Ringspeicher 54 entspricht. Die Zuordnung der variabel zuordenbaren Programme wird in einem Abschnitt 172 für ermittelte Programme der Liste 152 vermerkt.

Die Statistikeinheit enthält auch die Sendungsermittlungseinheit 168, mit deren Hilfe u.a. eine sendungsbezogene Statistik ermittelt wird. Eine Sendung Se3 mit der höchsten Einschaltquote wird einem Ringpuffer Rp6 zugeordnet. Die Sendung Se3 kommt an einem Tag D2 zu einer Zeit t3 in einem Programm P17. Diese Daten wurden von der Auswahlvorrichtung 150 automatisch durch Zugriff 180 auf eine Programmdatenbank 154 ermittelt. Die Programmdatenbank 154 enthält sowohl vergangene als auch zukünftige Programmdaten, vergleichbar mit den Daten in einer Fernseh-Programmzeitschrift. So sind in der Programmdatenbank 154 programmweise Sendungen aufgelistet, deren Sendezeit und deren Kategorie.

Eine Sendung Se4 wurde als Sendung mit der zweithäufigsten Einschaltquote ermittelt und dem Ringpuffer Rp6 oder einem anderen Ringpuffer zugeordnet. Die Sendung Se4 kommt am Tag D3 oder an einem anderen Tag zu einer Zeit t4 in einem Programm P11. Die variabel zugeordneten Sendungen Se3 und Se4 wurden in einem Abschnitt 176 für ermittelte Sendungen in der Liste 152 gespeichert.

Figur 6 zeigt den Ringspeicher 50, wobei die Speicherkapazität die Speicherung von jeweils zwei Vollbildern ermöglicht. Im Ringspeicher 50 werden Daten bis zu mehreren zurückliegenden I-Frames gespeichert. Der Startpunkt im Speicher für einen neuen Lesevorgang hängt davon ab, wo zum Startzeitpunkt der Schreibzeiger S1 im Verhältnis zu den I-Frame Zeigern steht.

Ein Pfeil 209 symbolisiert das zyklische Schreiben und Lesen des Ringspeichers 50. Bei der in Figur 6 dargestellten Lage des Schreibzeigers S1 kann noch nicht mit einem letzen I-Frame begonnen werden, weil eine durch einen Pfeil 208 dargestellte Mindestverzögerungszeit noch nicht gegeben ist. Eine Differenz zwischen einem Zeitpunkt, der der Position des Schreibzeigers S1 entspricht, und dem Zeitpunkt zu dem der vorletzte I-Rahmen gehört ist kürzer als die Mindestverzögerung 208.

Die Mindestverzögerung 208 ergibt sich im Ausführungsbeispiel aus:
- einer Verzögerung 202 für das Lesen des letzten I-Rahmen, dessen Beginn durch den I-Rahmenzeiger I1 angezeigt wird,
- einer Verzögerungszeit 204 für eine Vorwärtsfehlerkodierung, und
- einer CBR-Verzögerungszeit 206.

Die Daten, d.h. eine Sequenz von Bildern, die vom Video Server kommen, werden mit konstanter Bitrate (CBR) übertragen. Die Datenmenge, die für unterschiedliche Bildsequenzen anfällt ist jedoch nicht konstant, sondern abhängig vom Bildinhalt (z.B. Standbild oder "aktionsreiche" Bildsequenz). Da mit CBR übertragen wird, dauert es länger, eine aktionsreiche Bildsequenz zu übertragen, im Vergleich zur Übertragung der gleichen Anzahl von Quasi-Standbildern. Die maximale Verzögerung, die für eine aktionsreiche Bildsequenz zulässig ist, entspricht dem CBR-Delay. Anders ausgedrückt: Damit das Endgerät die aktionsreiche Bildsequenz dekodieren kann, muss der Eingangspuffer im Endgerät bis zu einem Mindestfüllstand (entspricht den Daten der aktionsreichen Bildsequenz) gefüllt sein. Erst wenn dieser Mindestfüllstand erreicht ist, beginnt der Dekodiervorgang. Die zeitliche Verzögerung bis zum Erreichen dieses Mindestfüllstandes entspricht dem CBR-Delay.

Solange der Schreibzeiger S1 in dem durch den Pfeil 208 angedeuteten Bereich ist, beginnt ein Leseburst beim vorletzten I-Rahmen, d.h. beim Zeiger II1.

Erst wenn der Schreibzeiger den Bereich 208 verlässt, und die Mindestverzögerung gegeben ist, beginnt ein Leseburst beim letzten I-Rahmen, d.h. an der durch den Zeiger I1 angezeigten Position.

Die Speicherkapazität des Ringspeichers 50 wird bei einem Ausführungsbeispiel dynamisch bzw. automatisch an die Erfordernisse angepasst. So werden nur zwei aufeinander folgenden I-Rahmen gespeichert, wenn die Mindestverzögerung klein ist bzw. klein wird.

Die Gesamtspeichermenge des Ringspeichers 50 sollte gemäß Figur 6 etwas größer, bspw. weniger als 10 Prozent größer, oder gleich der Summe aus den folgenden Speichermengen sein:
- Speichermenge für den vorletzten I-Rahmens,
- Speichermenge für die Daten in der I-Rahmenlücke,
- Speichermenge für den letzten I-Rahmen,
- Speichermenge für die FEC Verzögerung, und
- Speichermenge für die CBR Verzögerung.

Figur 7 zeigt den Ringspeicher 50, mit einer automatisch vergrößerten Speicherkapazität, welche die Speicherung von jeweils drei Vollbildern bzw. I-Rahmen ermöglicht, deren Position durch die Zeiger I1, II1 und III1 dargestellt werden. Die Zeiger I1, II1 und III1 zeigen in dieser Reihenfolge auf den Beginn des zuletzt im Ringspeicher 50 gespeicherten I-Rahmens, auf den Beginn des zu vorletzt im Ringspeicher 50 gespeicherten I-Rahmens bzw. auf den Beginn des vorvorletzen I-Rahmens.

Wenn eine Mindestverzögerung 218 größer als eine I-Rahmenlücke zwischen zwei aufeinander folgenden I-Rahmen ist, dann werden mehr als zwei I-Rahmenzeiger benötigt. Ein Pfeil 220 zeigt einen Bereich, in dem ein Leseburst beim vorvorletzten I-Rahmen beginnt.
Bei anderen Ausführungsbeispielen ist die Speicherung von jeweils vier I-Rahmen bzw. von jeweils fünf I-Rahmen erforderlich. Auch in diesen Fällen lässt sich die benötigte Speichermenge nach der im Zusammenhang mit der Figur 6 angegebenen Summe berechnen, wobei entsprechend mehr I-Rahmen und I-Rahmenlücken zu berücksichtigen sind.

Durch die dynamische Anpassung lassen sich mehr Ringspeicher in einer Speichereinheit realisieren, im Vergleich zu dem Fall, bei dem eine Maximum-Speichermenge für jeden Ringspeicher reserviert wird.

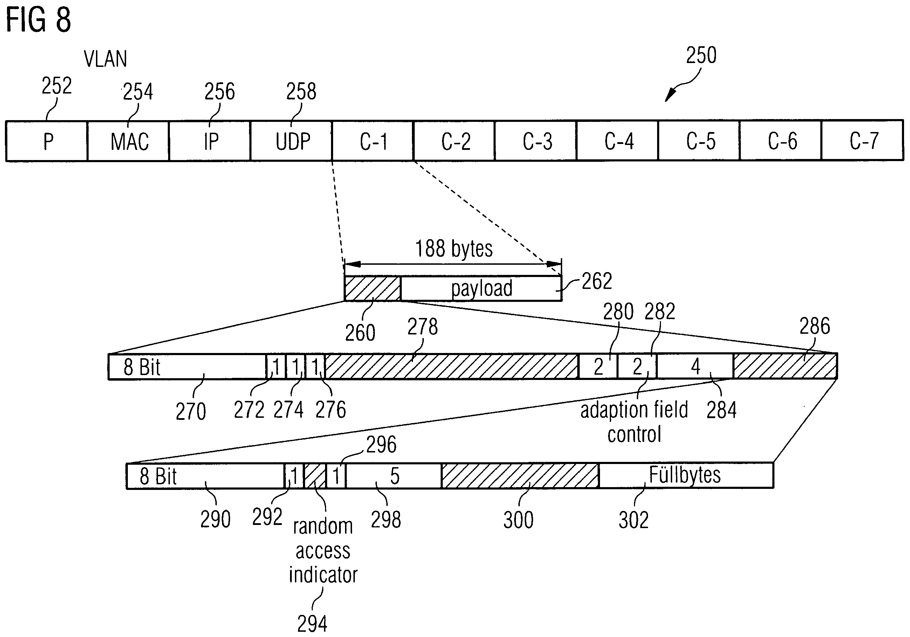

Figur 8 zeigt einen Ethernetrahmen 250, der zur Übertragung von MPEG-Daten in Containern C-1 bis C7 verwendet wird. Mehrere Ethernetrahmen 250 folgen unmittelbar aufeinander.

Der Ethernetrahmen 250 enthält in der folgenden Reihenfolge:
- Präambelbits und SFD (Start Frame Delimiter) Bits 252,
- einen MAC-Datenkopf 254 mit Quelladresse, Zieladresse, E-thernettypedatenfeld, VLAN (Virtual Local Area Network) ID (Identifier) u.a.,
- einen IP-Datenpaketkopf (Internet Protocol) 256, mit Längenfeld, Quelladresse, Zieladresse u.a.,
- einen UDP-Datenpaketkopf (User Datagramm Protocol) 258,
- MPEG Container C-1 bis C-7, die Sprachdaten bzw. Videodaten enthalten.

Der Aufbau eines MPEG Containers wird am Beispiel des Containers C-1 naher erläutert. Der Container C-1 enthält bspw. 188 Byte aufgeteilt auf einen Datenpaketkopf 260 und eine Nutzlast 262.

Der Datenpaketkopf 260 enthält in der folgenden Reihenfolge:
- acht Bits 270,
- drei Einzelbits 272, 274 und 276,
- Daten 278,
- ein Datenfeld 280 mit zwei Bits,
- ein Datenfeld 282, das als Adaptionsfeldsteuerdatenfeld bezeichnet wird und zwei Bits enthält,
- ein Datenfeld 284 mit einer Länge von vier Bits,
- ein Datenfeld 286.

Das Datenfeld 286 enthält in der folgenden Reihenfolge:
- acht Bit 290,
- ein Bit 292,
- ein Kennzeichen 294 zum Anzeigen eines wahlfreien Zugriffs (Random access indicator) mit einer Länge von einem Bit,
- ein Bit 296,
- ein Datenfeld 298 mit einer Länge von fünf Bits,
- ein Datenfeld 300, und
- Füllbytes 302.

Die nicht näher erläuterten Datenfelder sind im MPEG Standard näher erläutert. Diese Datenfelder haben keinen direkten Bezug zu der Erfindung, so dass nur auf den Standard verwiesen wird.

Um einen I-Rahmen zu finden, kann das Datenfeld 294 in Containern mit Videodaten geprüft werden, d.h. mit einem entsprechenden Paketkennzeichen (PID - packet identifier). Wenn das Bit 294 auf Eins gesetzt ist, signalisiert das, dass das aktuelle Videodatenpaket Informationen enthält, um einen wahlfreien Zugriff an diesem Punkt zu ermöglichen, was einem I-Rahmen entspricht.

Das Datenfeld 294 kann in dem Adaptionsfeld des Paketkopfes eines MPEG Containers gefunden werden. Das Steuerdatenfeld 282 muss z.B. "11" in diesem MPEG Container sein, signalisierend, dass das Adaptionsfeld vorhanden ist und dass ihm die Nutzdaten folgen. Das Paketkennzeichen PID, dass für Videopakete verwendet wird, kann durch Beachtung der Konfiguration des Videoencoders bestimmt werden.

Auch bei der Verwendung anderer Standards lassen sich ähnliche Informationen extrahieren, um die benötigte Speichermenge zu ermitteln und ggf. automatisch anzupassen. Ähnlich lässt sich auch das CBR erfassen oder die FEC Verzögerung. Alternativ lassen sich diese Werte manuell vorgeben.

Mit anderen Worten ausgedrückt, werden bei IPTV (Internet Protocol Television) TV-Streams als IP-Pakete von einem Video-Encoder über einen Access-Node bzw. eine Zugangsknoteneinheit, bspw. einen DSLAM (Digital Subscriber Line Access Multiplexer), zu den Teilnehmern übertragen. Alternativ werden optische Zugangsnetze verwendet, wie passive optische Netze oder aktive optische Netze. Der Video-Encoder könnte dabei einen statischen Datenstrom der bspw. alle Fernsehkanäle enthält zum Access-Node schicken, unabhängig davon, welche Fernsehkanäle im Access-Node welchen Teilnehmern zugeordnet werden. Die Videoverteilung zum Access-Node kann aber auch dynamisch erfolgen, d.h. der Access-Node bezieht bspw. per IGMP (Internet Group Management Protocol, Version 1 bis 3 oder höher) vom Netz eine Liste ausgewählter Fernsehkanäle. Selbstverständlich kann die Erfindung auch bei anderen Übertragungsverfahren und Steuerverfahren eingesetzt werden, bspw. bei einer Nutzung von Datenzellen in einem asynchronen Datenübertragungsmodus (ATM).

Die Zuordnung der einzelnen Fernsehkanäle zu den Teilnehmern und die Weiterverteilung der Fernsehkanäle vom ankommenden Datenstrom zu den einzelnen Teilnehmerleitungen z.B. DSL-Leitungen, ist Aufgabe des Access-Nodes.

Der Videostrom vom Video-Encoder wird mit konstanter Bitrate gesendet, wobei sich die Videodaten aus Vollbildern, die auch als I-Frames bezeichnet werden, und "Deltabildern" zusammensetzt, die sich aus dem vorhergehenden Vollbild ableiten. Beim "Zappen", d.h. beim Umschalten auf einen anderen Fernsehkanal, muss der Teilnehmer warten, bis das nächste Vollbild übertragen wird, bevor er wieder auf den Videostrom aufsynchronisieren werden kann. Dadurch entsteht ein Zapping-Delay, das bis zu mehreren Sekunden dauern kann und als sehr störend empfunden wird.

Vorstellbar ist eine Lösung, bei welcher der Video-Encoder einen Multicast-Datenstrom zum Access-Node schickt. Dort werden die ankommenden Ethernet-/IP-Pakete per Multicast bis zu den einzelnen Teilnehmerleitungen weiterverteilt. Die Zuordnung der Teilnehmer zu einer Multicastgruppe geschieht bspw. per IGMP-Mitteilungen, die von einer Set-Top-Box beim Teilnehmer an den Access-Node geschickt werden.

Jeder Teilnehmer erhält dabei einen Datenstrom mit der gleichen konstanten Bitrate, wie sie vom Video-Encoder gesendet wird. Außerdem muß er beim Zappen auf den nächsten I-Frame warten. Charakteristisch für diese Lösung ist, dass nur Constant-Bit-Rate Datenströme verwendet werden, die ohne Zwischenspeicherung vom Video-Encoder zum Teilnehmer weitergereicht werden.

Eine Verbesserung bzgl. Zapping-Delay könnte der Einsatz eines Ringpuffers bringen, der jeweils den letzten, die letzten beiden, die letzten drei I-Frames oder sogar mehr als die letzten drei I-Frames speichert. Charakteristisch für dieses Verfahren ist, dass der Multicast-Datenstrom in einem Puffer zwischengespeichert wird und aus dem Puffer zeitverzögert ein individueller Datenstrom zu einem Teilnehmer geschickt wird.

Der oben an Hand der Figuren erläuterte Vorschlag zur Weiterverteilung der IPTV-Streams im Access-Node verwendet das Verfahren des Einsatzes von Ringpuffern und erweitert es, um es effektiv zu implementieren, bspw. im DSLAM. Im Access-Node wird der IPTV-Datenstrom, der vom Video-Encoder verteilt wird, an eine Speichereinheit weitergeleitet. Die Teilnehmer erhalten ihre Fernsehdaten dann aus dieser Speichereinheit, oder, wenn die Kapazität des Speichers erschöpft ist, direkt vom eingehenden IPTV-Strom, siehe Figur 1 bzw. Figur 2.

Alle oder ausgewählte Fernsehkanäle, die vom Video-Encoder gesendet werden, werden in Ringspeichern zwischengespeichert, siehe Figur 3. Beispielsweise wird ein Ringspeicher pro Fernsehkanal verwendet. In einem typischen Szenario werden bspw. zwischen 20 und 500 Teilnehmer von einem Access-Knoten mit bspw. zwischen 20 und 200 Fernsehkanälen versorgt. Die Übertragungsraten pro Teilnehmerleitung liegen bspw. zwischen 5 und 15 Mbit/s (Megabit pro Sekunde). Bei VDSL (Very High Digital Subscriber Line) kann die Datenrate bspw. bis auf 70 Mbit/s erhöht werden.

Jeder Ringspeicher wird mit konstanter Bitrate beschrieben. Ein Schreib-Zeiger ("Now(Write)") zeigt an die Stelle im Speicher, an die aktuell geschrieben wird. Wählt ein Teilnehmer einen Fernsehkanal aus, kann aus dem entsprechenden Ringspeicher gelesen werden und ein individueller Datenstrom in Richtung Teilnehmer geschickt werden. Ein Lese-Zeiger zeigt an die Stelle, an der aktuell gelesen wird. Jeder Lesevorgang erhält einen eigenen Zeiger ("Read 1", "Read 2", ...). Die Lesegeschwindigkeit kann teilnehmerindividuell unterschiedlich sein, was auch als Burst-Betrieb bezeichnet wird, so lange, bis der Lese- den Schreib-Zeiger erreicht hat, danach kann mit konstanter Bitrate gelesen werden, d.h. mit der Bitrate, mit der auch geschrieben wird.

### Aspekt: Lesen aus Ringspeichern mit individuellen Datenströmen und Multicastdatenströmen

Würde bspw. weiterhin mit individuellen Datenströmen gesendet werden, kann es schnell zu Engpässen im System (Access-Node) kommen, oder systeminterne Datenwege/Schnittstellen müssten so sehr aufgeweitet werden, dass eine Realisierung nicht mehr wirtschaftlich sein kann. Außerdem müsste eine sehr hohe und von der Anzahl der Lesezugriffe abhängige Zahl von LeseZeigern verwaltet werden.

Deshalb kann es Vorteile bringen, pro Ringspeicher einen Multicast-Lese-Zeiger ("MC Read") einzuführen, der dem Schreib-Zeiger mit gleicher Geschwindigkeit folgt. Sobald ein Lese-Zeiger den Multicast-Lese-Zeiger erreicht hat, wird der Lese-Zeiger durch den Multicast-Lese-Zeiger ersetzt, d.h. individuelle Datenströme werden wieder zu einem Multicast-Datenstrom zusammengefasst und vom Ringspeicher zu den Teilnehmerleitungen verteilt, jetzt um die Speicherzeit verzögert zum Originaldatenstrom vom Video-Encoder.

Figur 4 gibt eine Übersicht über die zu verwaltenden Zeiger. Die I-Frame Zeiger ("last I-frame pointer", "second last I-frame pointer") zeigen an die Stellen, an der die Lesevorgänge beginnen.

### Aspekt: Puffern nur einer begrenzten Anzahl von Fernsehkanälen, z.B. nach Hitliste, Figur 5

Eine weitere Maßnahme um den Zwischenspeicher effektiver zu nutzen und Engpässe im System zu vermeiden, besteht darin, die Anzahl der in Ringpuffern gespeicherten Fernsehkanäle zu begrenzen. Nur eine Teilmenge der angebotenen Fernsehkanäle wird in Ringspeichern gepuffert und nach dem oben beschriebenen Verfahren an die Teilnehmer verteilt. Die Auswahl der gepufferten Kanäle kann zum Beispiel über eine "Hitliste" der am meisten gesehenen Fernsehkanäle erfolgen, die in bestimmten Zeitabständen aktualisiert wird.

Die in der Hitliste enthaltenen Fernsehkanäle können die Vorteile der Zwischenspeicherung nutzen, d.h. insbesondere geringes Zapping-Delay. Der Teilnehmer hat aber auch Zugriff auf die restlichen Fernsehkanäle, die über das herkömmliche Verfahren, d.h. bspw. Multicast, verteilt werden.

Für die Aufnahme in die Hitliste können die beiden folgenden Verfahren I und/oder II verwendet werden:
I.) Access-Node interner Lernmechanismus:
   - Der Access-Node führt eine Statistik und wertet die Historie der Auswahl der Fernsehkanäle aus, ein Bezug zum Verhalten einzelner Teilnehmer wird aber nicht hergestellt.
   - Vorbelegung der Hitliste mit einem Grundstock, z.B. öffentlich rechtliche Programme und wichtigste private Programm, und einem variablen Anteil, der aus Zuschauerverhalten bestimmt wird.
   - Aufnahme von solchen TV-Kanälen in die Liste, die in der Vergangenheit von vielen Teilnehmern ausgewählt und auch eine gewisse Zeit lang gesehen wurden, bevor weitergezappt wurde.
   - Aufnahme von bestimmten Fernsehsendungen/Serien, die in der Vergangenheit große Einschaltquoten hatten.
II.) Access-Node bietet Download-Interface zur Steuerung der Hitliste von außen:
   - Aufnahme von Fernsehsendungen von denen erwartet wird, dass sie in der Zukunft, wenn sie gesendet werden, große Einschaltquoten bringen, aufgrund von Kategorie der Sendung im TV-Programm, z.B. politische Sendung, Diskussionsrunde, Sportveranstaltung, usw.
   - Kategorie und Sendezeit kann durch Link zu TV-Programmtabellen ermittelt werden.
   - Die Information aus den Programmtabellen kann auch als Input für den Lernmechanismus I genutzt werden.

Wenn die Auswahl nach Einzelsendungen erfolgte, kann die Verweildauer in der Hitliste sehr kurz sein, bspw. etwas länger als die Sendedauer der Sendung, wenn der Fernsehkanal ansonsten eher "exotisch" ist. Dagegen werden allgemein beliebte Fernsehkanäle nur in größeren Abständen ausgetauscht werden.

### Aspekt: Begrenzen der aus den Ringspeichern verteilten TV-Streams

Eine weitere Möglichkeit, um Engpässe beim Lesen und Verteilen aus den Ringspeichern zu vermeiden, ohne von individuellen Strömen auf Multicast-Datenströme zu wechseln, besteht darin, die Anzahl der TV-Streams, die aus den Ringpuffern verteilt werden, zu begrenzen. D.h. wenn eine bestimmte Gesamtanzahl von Lesevorgängen aus den Ringspeichern aktiv ist und ein weiterer Teilnehmer auf einen Fernsehkanal in einem Ringspeicher zappt, wird dieser Teilnehmer nicht aus dem Ringspeicher bedient, sondern über das herkömmliche Multicast Verfahren.

Es kann eine zentrale Datenbasis im Access-Node verwendet werden, die einen Überblick gibt, welche Fernsehkanäle über den Ringspeicher oder direkt verteilt werden, bzw. welche Datenströme über den Ringspeicher oder direkt vom Video-Encoder durch den Access-Node zum Teilnehmer laufen.

### Aspekt: Verwaltung der Ringspeicher, Figuren 6 bis 8

Die Ringspeicherverwaltung kann dynamisch erfolgen, da unterschiedliche Fernsehkanäle unterschiedlichen Speicherbedarf haben können, bspw. je nach Videoformat (Bild in Bild, SDTV (Standard Definition Television), HDTV (High Density Television, usw.) ist die Datenmenge pro Bild unterschiedlich. Zusätzlich ist bspw. bei einer MPEG-Kodierung die Datenmenge pro Bild noch abhängig vom Bildinhalt. Aktionsreiche Bildsequenzen benötigen mehr Speicher als "Standbilder". Der Speicherbedarf ändert sich also auch ständig im zeitlichen Verlauf.

Beim Beschreiben der Ringspeicher werden die Speicherstellen markiert, an denen I-Frames stehen bzw. beginnen. Die Stelle im Ringspeicher an der der Lesevorgang beginnt, wird von der Speichereinheit selbständig ermittelt, basierend auf dem aktuellen Abstand Schreib- zu I-Frame-Zeiger. Dieser Abstand sollte eine bestimmte Mindestgröße haben, reicht der Abstand nicht aus, sollte nicht beim letzten I-Frame sondern bei einem weiter zurückliegenden I-Frame zu lesen begonnen werden.

Der Mindestabstand ist abhängig von Parametern, wie der Videostrom konfiguriert ist: Forward Error Correction (FEC) Blockgröße, Constant Bit Rate (CBR) Verzögerung. (Mindestabstand > FEC Delay + CBR Delay). Figur 6 zeigt ein Beispiel mit zwei und Figur 7 eines mit drei benötigten I-Frame Zeigern.

Aus dem Mindestabstand und dem I-Frame-Abstand kann auch die Größe des benötigten Ringpuffers ermittelt werden. (Größe >= Mindestabstand + I-Frame-Abstand)

Wenn der Schreib-Zeiger aus dem in Figur 6 durch den Pfeil 208 markierten Bereich herausgelaufen ist, wird der letzte im Ringpuffer gespeicherte I-Frame nicht mehr benötigt. Der Schreibvorgang kann wieder am Ringpufferanfang beginnen, d.h. es wird begonnen, den alten Ringpufferinhalt zu überschreiben.

Die Parameter wie I-Frame Abstand, FEC-Blockgröße, CBR-Delay werden im Video-Encoder konfiguriert und können durch den Operator, der den Access-Node konfiguriert auch für die Speichereinheit eingestellt werden. Eine andere Möglichkeit wäre, dass der Access-Node zu Beginn, bevor er anfängt einen TV-Strom in den Ringspeicher zu schreiben, diesen erst analysiert, die benötigten Parameter aus dem ankommenden Datenstrom selbständig ermittelt und damit seinen Ringspeicher konfiguriert, siehe bspw. Figur 8.

Die Motivation, die Ringspeichertechnologie einzusetzen, ist insbesondere die Verkürzung des Zapping Delay. Die beschriebenen Verfahren, vorzugsweise nur eine beschränkte Anzahl von Fernsehkanälen oder TV-Datenströmen über die Ringpuffer abzuwickeln, erlauben es, die Speichereinheit unabhängig von den genauen Umgebungsbedingungen zu dimensionieren. Die Speichereinheit kann kleiner und kostengünstiger dimensioniert werden, da die Anzahl der Teilnehmer, die Anzahl der TV-Streams pro Teilnehmer und die zulässige Anzahl der TV-Streams im Access-Node insgesamt nicht abhängig von der Speichereinheit ist.

Die Einsatzbedingungen können von Kunde zu Kunde unterschiedlich sein, z.B. bzgl. Anzahl der an den Access-Node angeschlossenen Teilnehmer, Anzahl der verfügbaren Fernsehkanäle. Die selbe Speichereinheit ist für unterschiedliche Einsatzfälle geeignet, da nur eine bestimmte Grundlast (z.B. die am häufigsten gesehenen Fernsehkanäle) über die Speichereinheit läuft und der Rest herkömmlich verarbeitet werden kann.

Der Kunde kann außerdem seine IPTV Umgebung beliebig ändern ohne dass dies Auswirkungen auf den Betrieb der Speichereinheit hat. Neue Teilnehmer können zu- oder weggeschaltet werden. Weiterhin kann die Anzahl und Art der angebotenen Fernsehkanäle geändert werden.

Die beispielsweise beschriebene Methode, Einzeldatenströme beim Auslesen aus den Ringspeichern wieder zu einer Musticastgruppe zusammenzufassen, verhindert, dass die Speichereinheit blockiert wird, wenn z.B. 95 Prozent der Teilnehmer einen Fernsehkanal sehen ("Endspiel Fußball WM") und nicht mehr genug Kapazitäten (freie Lesezeiger, Bandbreite auf den systeminternen Datenschnittstellen) für weitere Teilnehmer oder Teilnehmer, die einen zweiten Fernsehkanal sehen wollen, zur Verfügung steht.

Werden die Konfigurationsparameter für jeden einzelnen Ringspeicher aus dem eingehenden Datenstrom ermittelt, spielt es keine Rolle von welchem Video-Encoder der einzelne TV-Kanal geliefert wird, unterschiedliche Videoquellen mit unterschiedlichen Einstellungen können parallel genutzt werden.

Die genannten Verfahren lassen sich bspw. für die Verteilung von Fernsehprogrammen oder für andere Dienste verwenden. In den Ringspeichern wird vorzugsweise ein IP-Paketstrom bzw. ein Etherentrahmen-Datenstrom gespeichert. Alternativ kann jedoch auch ein kontinuierlicher Bytestrom gespeichert werden, der erst nach dem Auslesen paketiert wird. Die genannten Aspekte lassen sich jeweils unabhängig von den anderen Aspekten oder in Kombination mit mindestens einem weiteren Aspekt einsetzen.

### Bezugszeichenliste

- 10: Datenübertragungsnetzwerk
- 12: Zugangsnetzwerk
- 14: Hauptnetzwerk
- NG1 bis NG4: Nutzergerät
- Tln1 bis Tln4: Teilnehmer
- 20: weitere Teilnehmer
- DSL1 bis DSL4: Anschlussleitung
- 22: Zugangsknoteneinheit
- P1 bis P4: Port
- 24: Steuereinheit
- 26: Paketvermittlungseinheit
- 27: Datenbank
- 28: Multicastdatenbank
- 30, 32: Schnittstelle
- A: VLAN Kennzeichen
- 301, 303: VLAN Kennzeichen
- 38: Verbindung
- 40: Speichereinheit
- 41: Schnittstelle
- 42: Speicherverwaltung
- 48 bis 56: Ringspeicher
- 60 bis 70: Steuernachricht
- 72: Datenbankzugriff
- 74a: Pfeil
- 75: Pfeil
- 80 bis 142: Videodaten
- S0 bis Sxx: Schreibzeiger
- M0 bis Mxx: Multicastlesezeiger
- LS0 bis LS20: Lesezeiger
- I1 bis Ixx: vorletzter I-Rahmenzeiger
- II1 bis IIxx: vorvorletzter I-Rahmenzeiger
- 150: Auswahleinheit
- 151: Erstellen
- 152: Zuordnungsliste
- 154: Programmdatenbank
- 160: Basisprogrammeinheit
- 162: Basissendungseinheit
- 164: Statistikeinheit
- 166: Programmermittlungseinheit
- 168: Sendungsermittlungseinheit
- 170: Abschnitt für Basisprogramme
- 172: Abschnitt für ermittelte Programme
- 174: Abschnitt für Basissendungen
- 176: Abschnitt für ermittelte Sendungen
- 178: Wartungszugriff
- 180: Fernzugriff
- P1 bis P11: Programm
- D1 bis D3: Tag
- t1 bis t4: Uhrzeit
- 200: Zugriffsrichtung
- 202 bis 208: Verzögerung
- 209: zyklisches Schreiben
- 218: Verzögerung
- 220: Zeitspanne
- 221: zyklisches Schreiben
- 250: Ethernetrahmen
- 252: Präambel
- 254: MAC-Paketkopf
- 256: IP-Paketkopf
- 258: UDP-Paketkopf
- C-1 bis C-7: MPEG-Container
- 260: Paketkopf
- 262: Nutzdaten
- 270 bis 280: Daten
- 282: Adaptionsfeldsteuerdaten
- 284, 286: Datenfeld
- 290, 292: Datenfeld
- 294: wahlfreier Zugriffsanzeiger
- 296 bis 300: Datenfeld
- 302: Füllbits

## Patentansprüche

1. Verfahren zum Auslesen von Daten, enthaltend:
- Speichern von Daten einer Datenfolge in einer Speichereinheit (50),
- erstes Auslesen (104) von Daten der Datenfolge für einen ersten Teilnehmer (Tln2),
- vom ersten Auslesen (104) getrenntes zweites Auslesen (94) der Daten der Datenfolge für einen zweiten Teilnehmer (Tln4),
- wobei die Auslesevorgänge des ersten Auslesens (104) und des zweiten Auslesens (94) aneinander angeglichen werden,
- wobei die Daten komprimierte Daten enthalten,
- wobei das Auslesen (94) für den zweiten Teilnehmer mit dem Auslesen von Daten eines Bildes beginnt, für dessen Decodierung keine Daten eines anderen Bildes erforderlich sind und
**dadurch gekennzeichnet, dass**
- die Daten für den zweiten Teilnehmer (Tln4) schneller als dieselben Daten für den ersten Teilnehmer (Tln2) ausgelesen werden.

2. Verfahren nach Anspruch 1, **dadurch gekennzeichnet, dass** die Daten für den zweiten Teilnehmer (Tln4) vor dem Angleichen als Unicast (94) verteilt werden,
und dass die Daten für den zweiten Teilnehmer (Tln4) nach dem Angleichen als Multicast (130) verteilt werden.

3. Verfahren nach einem der vorhergehenden Ansprüche, **gekennzeichnet durch** Verwenden eines ersten Lesezeigers (M1), der die Datenposition für das Auslesen der Daten für den ersten Teilnehmer (Tln2) angibt,
und durch einen zweiten Lesezeiger (L2), der die Datenposition für das Auslesen der Daten für den zweiten Teilnehmer (Tln4) angibt.

4. Verfahren nach einem der einem der vorhergehenden Ansprüche, **gekennzeichnet durch**, Verwenden eines Schreibzeigers (S1), der die Datenposition angibt, an der ankommende Daten in die Speichereinheit (50) geschrieben werden,
und durch Verwenden eines Multicastzeigers (M1), der die Datenposition für das Auslesen nach dem Zusammenfassen angibt.

5. Verfahren nach Anspruch 3 und 4, **dadurch gekennzeichnet, dass** der Multicastzeiger (M1) auf Daten zeigt, die in der Speichereinheit (50) zeitlich vor Daten gespeichert worden sind, auf die der zweite Datenzeiger (L2) vor dem Angleichen zeigt.

6. Verfahren nach einem der vorhergehenden Ansprüche, **dadurch gekennzeichnet, dass** die gelesenen Daten in der Speichereinheit (50) überschrieben werden bevor gleichzeitig drei Vollbilder oder bevor gleichzeitig vier Vollbilder (I-Frame) gespeichert werden.

7. Verfahren nach einem der vorhergehenden Ansprüche, **dadurch gekennzeichnet, dass** in einer Datenbank (28) vermerkt wird, dass ein Teilnehmer (Tln2, Tln4) einen Multicast erhalten soll,
wobei jedoch zunächst vermerkt wird, dass noch keine Freigabe für diesen Teilnehmer erfolgt ist.

8. Verfahren nach Anspruch 7, **dadurch gekennzeichnet, dass** die Freigabe nach dem Angleichen erfolgt.

9. Verfahren nach einem der vorhergehenden Ansprüche, **dadurch gekennzeichnet, dass** eine Speichereinheit (40) das Angleichen durchführt,
und dass einer Speicherverwaltungseinheit (42) der Speichereinheit (40) signalisiert wird, welcher Teilnehmer (Tln2, Tln4) welche Datenfolge erhalten soll.

10. Verfahren nach Anspruch 9, **dadurch gekennzeichnet, dass** den Teilnehmern (Tln2, Tln4) eigene VLAN Kennzeichen (301, 303) zugeordnet sind,
und dass die VLAN Kennzeichen (301, 303) von der Speichereinheit (40) zur Adressierung der ausgelesenen Datenfolgen verwendet werden.

11. Verfahren nach Anspruch 10, **dadurch gekennzeichnet, dass** ein VLAN-Kennzeichen (D) verwendet wird, mit dem die Speichereinheit (40) eine Datenfolge kennzeichnet, die gemäß Multicast verteilt werden soll.

12. Verfahren nach einem der vorhergehenden Ansprüche, **dadurch gekennzeichnet, dass** eine maximale Anzahl von Teilnehmern (Tln1 bis Tln4) festgelegt wird, für die Daten aus der Speichereinheit (50) ausgelesen werden.

13. Verfahren nach Anspruch 12, **dadurch gekennzeichnet, dass**, beim Überschreiten der maximalen Anzahl die Datenfolge zusätzlich auch ohne Nutzen der Speichereinheit (50) verteilt (110, 114) wird.

14. Verfahren nach einem der vorhergehenden Ansprüche, enthaltend:
Erfassen der in einer Zeitspanne abgerufenen Datenfolgen (P1, Se1),
Ermitteln einer Datenfolge, die eine hohe Abrufquote im Vergleich zu mindestens einer anderen abgerufenen Datenfolge hat,
automatisches Zuordnen einer Speichereinheit (50) zu der Datenfolge (P1, Se1) mit der hohen Abrufquote, wobei die Speichereinheit (50) als eine Datenpuffereinheit verwendet wird, mit deren Hilfe die Umschaltzeit für das Umschalten auf die Datenfolge (P1, Se1) mit der hohen Abrufquote verkürzt wird.

15. Verfahren nach Anspruch 14, **dadurch gekennzeichnet, dass** die Datenfolge ein Programm (P1) darstellt,
oder dass die Datenfolge einen Videofilm betrifft.

16. Verfahren nach Anspruch 14, **dadurch gekennzeichnet, dass** die Datenfolge eine Sendung (Se1) betrifft, und
dass vorzugsweise auf eine Programmdatenbank (154) zugegriffen wird, um die Sendung (Se1) und/oder die Zeit ihrer erneuten Verteilung zu ermitteln.

17. Verfahren nach einem der Ansprüche 14 bis 16, **dadurch gekennzeichnet, dass** mindestens einer Speichereinheit manuell ein Programm (P1) oder eine Sendung (Se1) fest zugeordnet wird.

18. Verfahren nach einem der vorhergehenden Ansprüche, **dadurch gekennzeichnet, dass** mindestens eine Datenbasis (28) verwendet wird, in der gespeichert wird, welche Datenfolgen über eine Speichereinheit (48 bis 56) und welche Datenfolgen direkt (110, 114) verteilt werden.

19. Verfahren nach einem der vorhergehenden Ansprüche, enthaltend:
Speichern von Daten einer Datenfolge in einer Speichereinheit (50),
automatisches Festlegen des für das Speichern der Datenfolge in der Speichereinheit (50) zur Verfügung stehenden Speicherbedarfs.

20. Verfahren nach Anspruch 19, **dadurch gekennzeichnet, dass** das Festlegen abhängig der Datenmenge pro Bild und/oder pro Bildsequenz erfolgt.

21. Verfahren nach Anspruch 19 oder 20, **dadurch gekennzeichnet, dass** der Speicherbedarf erhöht wird, weil auf ein vorvorletztes Vollbild (II1) zugegriffen werden muss.

22. Verfahren nach Anspruch 19 oder 20, **dadurch gekennzeichnet, dass** der Speicherbedarf verringert wird, weil nur noch auf ein vorletztes Vollbild (I1) jedoch nicht mehr auf ein vorvorletztes Vollbild (II1) zugegriffen werden muss.

23. Verfahren nach einem der Ansprüche 19 bis 22, **dadurch gekennzeichnet, dass** zum Festlegen des Speicherbedarfs die Datenfolge analysiert wird.

24. Verfahren nach Anspruch 23, **dadurch gekennzeichnet, dass** die Datenfolge komprimierte Daten enthält.

25. Verfahren nach Anspruch 24, **dadurch gekennzeichnet, dass** bezüglich mindestens eines der folgenden Parameter analysiert wird:
- zeitlicher Abstand von unkomprimierten Daten (I-Frame),
- Blockgröße einer Vorwärtsfehlerkorrektur (FEC),
- konstante Bitraten-Verzögerung (CBR-Delay).

26. Verfahren nach Anspruch 25, **dadurch gekennzeichnet, dass** der zeitliche Abstand von unkomprimierten Bildern (I-Frame) über Auswertung eines Kopffeldes (260) in einem Datenpaket (C-1) ermittelt wird, insbesondere des Random Access Indicator Feldes (294) gemäß MPEG.

27. Vorrichtung zum Auslesen von Daten,
enthaltend:
- eine Speichereinheit (50), die zum Speichern von Daten einer Datenfolge geeignet ist oder verwendet wird,
- eine erste Ausleseeinheit, (M1) die zum Auslesen von Daten der Datenfolge für einen ersten Teilnehmer (Tln2) geeignet ist oder verwendet wird,
- eine zweite Ausleseeinheit (L2), die zum Auslesen der Daten der Datenfolge für einen zweiten Teilnehmer (Tln4) geeignet ist oder verwendet wird,
- eine Steuereinheit (42), die die Ausleseinheiten (M1, L2) derart steuert, dass sich die Auslesevorgänge (94, 102) angleichen,
- wobei die Daten komprimierte Daten enthalten,
- wobei das Auslesen (94) für den zweiten Teilnehmer mit dem Auslesen von Daten eines Bildes (I-Frame) beginnt, für dessen Decodierung keine Daten eines anderen Bildes erforderlich sind,
**gekennzeichnet dadurch, dass**
- die Daten für den zweiten Teilnehmer (Tln4) schneller als dieselben Daten für den ersten Teilnehmer (Tln2) ausgelesen werden.

28. Vorrichtung nach Anspruch 27, wobei die Steuereinheit (42), ein Zusammenfassen des Auslesens (130) nach dem Angleichen veranlasst.

29. Vorrichtung nach einem der Ansprüche 27 oder 28, **gekennzeichnet durch** Einheiten zum Durchführen des Verfahrens nach einem der Ansprüche 1 bis 28.

30. Vorrichtung nach Anspruch 27, **gekennzeichnet durch** eine Steuereinheit (42), die die Ausleseinheiten unabhängig voneinander steuert.

31. Vorrichtung (150) nach einem der Ansprüche 27 bis 30, enthaltend:
eine Erfassungseinheit, die zum Erfassen der in einer Zeitspanne abgerufen Datenfolgen geeignet ist oder verwendet wird,
eine Ermittlungseinheit (164), die zum Ermitteln einer Datenfolge, die eine hohe Abrufquote im Vergleich zu mindestens einer anderen abgerufenen Datenfolge hat, geeignet ist oder verwendet wird,
und eine Zuordnungseinheit (151), die zum automatischen Zuordnen einer Speichereinheit zu der Datenfolge mit der hohen Abrufquote geeignet ist oder verwendet wird, wobei die Speichereinheit als eine Datenpuffereinheit verwendet wird,
mit deren Hilfe die Umschaltzeit für das Umschalten auf das Programm mit der hohen Abrufquote verkürzt wird.

32. Vorrichtung nach einem der Ansprüche 27 bis 31, enthaltend:
eine Festlegungseinheit (42), die zum automatisches Festlegen des für das Speichern der Datenfolge in der Speichereinheit zur Verfügung stehenden Speicherbedarfs geeignet ist oder verwendet wird.

## Claims

1. Method for reading data, involving:
- storing data of a data sequence in a memory unit (50),
- reading (104) data of the data sequence a first time for a first subscriber (Tln2),
- reading (94) the data of the data sequence a second time, separately from the reading (104) the first time, for a second subscriber (Tln4),
- wherein the reading processes of reading (104) the first time and reading (94) the second time are aligned with one another,
- wherein the data contain compressed data,
- wherein the reading (94) for the second subscriber begins with the reading of data of a picture whose decoding requires no data of another picture, and
**characterized in that**
- the data for the second subscriber (Tln4) are read faster than the same data for the first subscriber (Tln2).

2. Method according to Claim 1, **characterized in that** the data for the second subscriber (Tln4) are distributed as a unicast (94) before the aligning,
and **in that** the data for the second subscriber (Tln4) are distributed as a multicast (130) after the aligning.

3. Method according to either of the preceding claims, **characterized by** using a first read pointer (M1), which indicates the data position for the reading of the data for the first subscriber (Tln2),
and by a second read pointer (L2), which indicates the data position for the reading of the data for the second subscriber (Tln4).

4. Method according to one of the preceding claims, **characterized by** using a write pointer (S1), which indicates the data position at which arriving data are written to the memory unit (50),
and by using a multicast pointer (M1), which indicates the data position for the reading after the combining.

5. Method according to Claims 3 and 4, **characterized in that** the multicast pointer (M1) points to data that have been stored in the memory unit (50) at a time before data to which the second data pointer (L2) points before the aligning.

6. Method according to one of the preceding claims, **characterized in that** the read data in the memory unit (50) are overwritten before three frames are stored at the same time or before four frames (I frame) are stored at the same time.

7. Method according to one of the preceding claims, **characterized in that** a database (28) is used to record that a subscriber (Tln2, Tln4) is supposed to receive a multicast,
but wherein it is first of all recorded that clearance has not yet been given for this subscriber.

8. Method according to Claim 7, **characterized in that** the clearance is given after the aligning.

9. Method according to one of the preceding claims, **characterized in that** a memory unit (40) performs the aligning,
and **in that** a memory management unit (42) of the memory unit (40) is provided with signalling indicating which subscriber (Tln2, Tln4) is supposed to receive which data sequence.

10. Method according to Claim 9, **characterized in that** the subscribers (Tln2, Tln4) have associated individual VLAN identifiers (301, 303),
and **in that** the VLAN identifiers (301, 303) are used by the memory unit (40) to address the read data sequences.

11. Method according to Claim 10, **characterized in that** a VLAN identifier (D) is used, which the memory unit (40) uses to identify a data sequence that is supposed to be distributed under multicast.

12. Method according to one of the preceding claims, **characterized in that** a maximum number of subscribers (Tln1 to Tln4) is stipulated for the data which are read from the memory unit (50).

13. Method according to Claim 12, **characterized in that** if the maximum number is exceeded then the data sequence is additionally distributed (110, 114) even without using the memory unit (50).

14. Method according to one of the preceding claims, involving:
capturing the data sequences (P1, Se1) retrieved in a period,
ascertaining a data sequence that has a high retrieval rate in comparison with at least one other retrieved data sequence,
automatically assigning a memory unit (50) to the data sequence (P1, Se1) having the high retrieval rate, wherein the memory unit (50) is used as a data buffer unit, with the aid of which the changeover time for changing over to the data sequence (P1, Se1) having the high retrieval rate is shortened.

15. Method according to Claim 14, **characterized in that** the data sequence is a programme (P1),
or **in that** the data sequence relates to a video film.

16. Method according to Claim 14, **characterized in that** the data sequence relates to a transmission (Se1), and
**in that** preferably a programme database (154) is accessed in order to ascertain the transmission (Se1) and/or the time at which said transmission is distributed again.

17. Method according to one of Claims 14 to 16, **characterized in that** at least one memory unit is firmly assigned a programme (P1) or a transmission (Se1) manually.

18. Method according to one of the preceding claims, **characterized in that** at least one database (28) is used, which is used to store which data sequences are distributed via a memory unit (48 to 56) and which data sequences are distributed directly (110, 114).

19. Method according to one of the preceding claims, involving:
storing data of a data sequence in a memory unit (50), automatically stipulating the memory requirement available for storing the data sequence in the memory unit (50).

20. Method according to Claim 19, **characterized in that** the stipulating is effected on the basis of the volume of data per picture and/or per picture sequence.

21. Method according to Claim 19 or 20, **characterized in that** the memory requirement is increased because an antepenultimate frame (II1) needs to be accessed.

22. Method according to Claim 19 or 20, **characterized in that** the memory requirement is decreased because now only a penultimate frame (I1) but no longer an antepenultimate frame (II1) needs to be accessed.

23. Method according to one of Claims 19 to 22, **characterized in that** the memory requirement is stipulated by analysing the data sequence.

24. Method according to Claim 23, **characterized in that** the data sequence contains compressed data.

25. Method according to Claim 24, **characterized in that** at least one of the following parameters has analysis performed for it:
- interval of time between uncompressed data (I frame),
- block size of a forward error correction (FEC),
- constant bit rate delay (CBR delay).

26. Method according to Claim 25, **characterized in that** the interval of time between uncompressed pictures (I frame) is ascertained by evaluating a header field (260) in a data packet (C-1), in particular the random access indicator field (294) under MPEG.

27. Apparatus for reading data,
containing:
- a memory unit (50) suitable or used for storing data of a data sequence,
- a first reading unit (M1) suitable or used for reading data of the data sequence for a first subscriber (Tln2),
- a second reading unit (L2) suitable or used for reading the data of the data sequence for a second subscriber (Tln4),
- a control unit (42) that controls the reading units (M1, L2) such that the reading processes (94, 102) are aligned,
- wherein the data contain compressed data,
- wherein the reading (94) for the second subscriber begins with the reading of data of a picture (I frame) whose decoding requires no data of another picture,
**characterized in that**
- the data for the second subscriber (Tln4) are read faster than the same data for the first subscriber (Tln2).

28. Apparatus according to Claim 27, wherein the control unit (42) prompts a combining of the reading (130) after the aligning.

29. Apparatus according to either of Claims 27 and 28, **characterized by** units for performing the method according to one of Claims 1 to 28.

30. Apparatus according to Claim 27, **characterized by** a control unit (42) that controls the reading units independently of one another.

31. Apparatus (150) according to one of Claims 27 to 30, containing:
a capture unit suitable or used for capturing the data sequences retrieved in a period,
an ascertaining unit (164) suitable or used for ascertaining a data sequence that has a high retrieval rate in comparison with at least one other retrieved data sequence,
and an assigning unit (151) suitable or used for automatically assigning a memory unit to the data sequence having the high retrieval rate, wherein the memory unit is used as a data buffer unit, with the aid of which the changeover time for changing over to the program having the high retrieval rate is shortened.

32. Apparatus according to one of Claims 27 to 31, containing:
a stipulating unit (42) suitable or used for automatically stipulating the memory requirement available for storing the data sequence in the memory unit.

## Revendications

1. Procédé de lecture de données comprenant :
- l'enregistrement de données d'une suite de données dans une unité de mémoire (50),
- la première lecture (104) de données de la suite de données pour un premier abonné (Tln2),
- la deuxième lecture (94), séparée de la première lecture (104), des données de la suite de données pour un deuxième abonné (Tln4),
- les opérations de lecture de la première lecture (104) et de la deuxième lecture (94) étant alignées l'une sur l'autre,
- les données contenant des données compressées,
- la lecture (94) pour le deuxième abonné commençant par la lecture de données d'une image pour le décodage de laquelle aucune donnée d'une autre image n'est nécessaire et
**caractérisé en ce que**
- les données pour le deuxième abonné (Tln4) sont lues plus rapidement que les mêmes données pour le premier abonné (Tln2).

2. Procédé selon la revendication 1, **caractérisé en ce que**
les données pour le deuxième abonné (Tln4) sont distribuées sous la forme d'une unidiffusion (94) avant l'alignement,
et **en ce que** les données pour le deuxième abonné (Tln4) sont distribuées sous la forme d'une multidiffusion (130) après l'alignement.

3. Procédé selon l'une des revendications précédentes, **caractérisé par** l'utilisation d'un premier pointeur de lecture (M1) qui indique la position des données pour la lecture des données pour le premier abonné (Tln2),
et par un deuxième pointeur de lecture (L2) qui indique la position des données pour la lecture des données pour le deuxième abonné (Tln4).

4. Procédé selon l'une des revendications précédentes, **caractérisé par** l'utilisation d'un pointeur d'écriture (S1) qui indique la position des données à laquelle sont écrites les données arrivantes dans l'unité de mémoire (50),
et par l'utilisation d'un pointeur de multidiffusion (M1) qui indique la position des données pour la lecture après le regroupement.

5. Procédé selon les revendications 3 et 4, **caractérisé en ce que** le pointeur de multidiffusion (M1) pointe sur les données qui ont été enregistrées dans l'unité de mémoire (50) chronologiquement avant les données sur lesquelles pointe le deuxième pointeur de données (L2) avant l'alignement.

6. Procédé selon l'une des revendications précédentes, **caractérisé en ce que** les données lues sont écrasées dans l'unité de mémoire (50) avant que trois images complètes soient simultanément enregistrées ou avant que quatre images complètes (trame I) soient simultanément enregistrées.

7. Procédé selon l'une des revendications précédentes, **caractérisé en ce qu'**une mention est effectuée dans une base de données (28), selon laquelle un abonné (Tln2, Tln4) doit recevoir une multidiffusion,
une mention étant toutefois tout d'abord effectuée selon laquelle une validation n'a pas encore eu lieu pour cet abonné.

8. Procédé selon la revendication 7, **caractérisé en ce que** la validation a lieu après l'alignement.

9. Procédé selon l'une des revendications précédentes, **caractérisé en ce qu'**une unité de mémoire (40) effectue l'alignement,
et **en ce qu'**on signale à une unité de gestion de mémoire (42) de l'unité de mémoire (40) quel abonné (Tln2, Tln4) doit recevoir quelle suite de données.

10. Procédé selon la revendication 9, **caractérisé en ce que** des identificateurs de VLAN (301, 303) propres sont attribués aux abonnés (Tln2, Tln4),
et **en ce que** les identificateurs de VLAN (301, 303) sont utilisés par l'unité de mémoire (40) pour l'adressage des suites de données lues.

11. Procédé selon la revendication 10, **caractérisé en ce qu'**un identificateur de VLAN (D) est utilisé avec lequel l'unité de mémoire (40) identifie une suite de données qui doit être distribuée conformément à la multidiffusion.

12. Procédé selon l'une des revendications précédentes, **caractérisé en ce qu'**un nombre maximal d'abonnés (Tln1 à Tln4) est spécifié pour lesquels des données sont lues de l'unité de mémoire (50).

13. Procédé selon la revendication 12, **caractérisé en ce qu'**en cas de dépassement du nombre maximal, la suite de données est en plus également distribuée (110, 114) sans utilisation de l'unité de mémoire (50).

14. Procédé selon l'une des revendications précédentes, comprenant :
la détection des suites de données (P1, Se1) appelées dans un intervalle de temps,
la détermination d'une suite de données qui présente un taux d'appel élevé en comparaison d'au moins une autre suite de données appelée,
l'attribution automatique d'une unité de mémoire (50) à la suite de données (P1, Se1) ayant le taux d'appels le plus élevé, l'unité de mémoire (50) étant utilisée comme une unité de tampon de données à l'aide de laquelle le temps de permutation pour la permutation sur la suite de données (P1, Se1) ayant le taux d'appels le plus élevé est raccourci.

15. Procédé selon la revendication 14, **caractérisé en ce que** la suite de données représente un programme (P1), ou **en ce que** la suite de données concerne un film vidéo.

16. Procédé selon la revendication 14, **caractérisé en ce que** la suite de données concerne une émission (Se1) et
**en ce qu'**un accès à une base de données de programmes (154) est de préférence effectué afin de déterminer l'émission (Se1) et/ou l'heure de sa nouvelle distribution.

17. Procédé selon l'une des revendications 14 à 16, **caractérisé en ce qu'**un programme (P1) ou une émission (Se1) est attribué(e) manuellement à demeure à au moins une unité de mémoire.

18. Procédé selon l'une des revendications précédentes, **caractérisé en ce qu'**au moins une base de données (28) est utilisée, dans laquelle sont enregistrées quelles suites de données sont distribuées par le biais d'une unité de mémoire (48 à 56) et quelles suites de données sont distribuées directement (110, 114).

19. Procédé selon l'une des revendications précédentes, comprenant :
l'enregistrement de données d'une suite de données dans une unité de mémoire (50),
la spécification automatique du besoin en mémoire disponible dans l'unité de mémoire (50) pour l'enregistrement de la suite de données.

20. Procédé selon la revendication 19, **caractérisé en ce que** la spécification est effectuée en fonction du volume de données par image et/ou par séquence d'images.

21. Procédé selon la revendication 19 ou 20, **caractérisé en ce que** le besoin en mémoire est augmenté car il faut accéder à une avant-avant-dernière image complète (II1).

22. Procédé selon la revendication 19 ou 20, **caractérisé en ce que** le besoin en mémoire est réduit, car il faut seulement encore accéder à une avant-dernière image complète (I1) et toutefois plus à une avant-avant-dernière image complète (II1).

23. Procédé selon l'une des revendications 19 à 22, **caractérisé en ce que** la suite de données est analysée en vue de spécifier le besoin en mémoire.

24. Procédé selon la revendication 23, **caractérisé en ce que** la suite de données contient des données compressées.

25. Procédé selon la revendication 24, **caractérisé en ce qu'**une analyse est effectuée concernant au moins l'un des paramètres suivants :
- écart dans le temps entre des données non compressées (trame I),
- taille de bloc d'une correction d'erreurs sans voie de retour (FEC),
- retard de débit binaire constant (CBR-Delay).

26. Procédé selon la revendication 25, **caractérisé en ce que** l'écart dans le temps entre des images non compressées (trame I) est déterminé par le biais de l'interprétation d'un champ d'en-tête (260) dans un paquet de données (C-1), notamment le champ indicateur d'accès aléatoire (294) selon MPEG.

27. Dispositif de lecture de données, comprenant :
- une unité de mémoire (50) qui est adaptée ou est utilisée pour l'enregistrement de données d'une suite de données,
- une première unité de lecture (M1), qui est adaptée ou est utilisée pour lire des données de la suite de données pour un premier abonné (Tln2),
- une deuxième unité de lecture (L2), qui est adaptée ou est utilisée pour lire les données de la suite de données pour un deuxième abonné (Tln4),
- une unité de commande (42) qui commande les unités de lecture (M1, L2) de telle sorte que les opérations de lecture (94, 102) sont alignées,
- les données contenant des données compressées,
- la lecture (94) pour le deuxième abonné commençant par la lecture de données d'une image (trame I) pour le décodage de laquelle aucune donnée d'une autre image n'est nécessaire,
**caractérisé en ce que**
- les données pour le deuxième abonné (Tln4) sont lues plus rapidement que les mêmes données pour le premier abonné (Tln2).

28. Dispositif selon la revendication 27, l'unité de commande (42) produisant un regroupement de la lecture (130) après l'alignement.

29. Dispositif selon l'une des revendications 27 et 28, **caractérisé par** des unités destinées à mettre en œuvre le procédé selon l'une des revendications 1 à 28.

30. Dispositif selon la revendication 27, **caractérisé par** une unité de commande (42) qui commande les unités de lecture indépendamment les uns des autres.

31. Dispositif (150) selon l'une des revendications 27 à 30, comprenant :
une unité de détection qui est adaptée ou est utilisée pour détecter les suites de données appelées dans un intervalle de temps,
une unité de détermination (164) qui est adaptée ou est utilisée pour déterminer une suite de données qui présente un taux d'appel élevé en comparaison d'au moins une autre suite de données appelée,
et une unité d'attribution (151) qui est adaptée ou est utilisée pour attribuer automatiquement une unité de mémoire à la suite de données ayant le taux d'appels le plus élevé, l'unité de mémoire étant utilisée comme une unité de tampon de données à l'aide de laquelle le temps de permutation pour la permutation sur le programme ayant le taux d'appels le plus élevé est raccourci.

32. Dispositif selon l'une des revendications 27 à 31, comprenant :
une unité de spécification (42) qui est adaptée ou est utilisée pour spécifier automatiquement le besoin en mémoire disponible dans l'unité de mémoire pour l'enregistrement de la suite de données.
